# EUROPÄISCHE PATENTSCHRIFT

(11) **EP 4 547 579 B1**
(45) Veröffentlichungstag und Bekanntmachung des Hinweises auf die Patenterteilung: **01.04.2026**
(21) Anmeldenummer: 23745044.0
(22) Anmeldetag: 28.06.2023
(51) Int. Cl.: B65G 1/137, G06Q 10/08

(54) **MEHRSTUFIGES VERFAHREN ZUM AUTOMATISCHEN SEQUENZIEREN VON WAREN SOWIE KOMMISSIONIERSYSTEM DAZU**
MULTI-STAGE METHOD FOR AUTOMATICALLY SEQUENCING GOODS, AND ORDER-PICKING SYSTEM FOR SAME
PROCÉDÉ EN PLUSIEURS ÉTAPES POUR LE SÉQUENÇAGE AUTOMATIQUE DE MARCHANDISES, ET SYSTÈME DE PRÉPARATION DE COMMANDES POUR CE DERNIER

(30) Priorität: 30.06.2022 AT 504772022
(43) Veröffentlichungstag der Anmeldung: 07.05.2025
(73) Patentinhaber: TGW Logistics GmbH, 4614 Marchtrenk (AT)
(72) Erfinder: MESSNER, Gerhard, 4020 Linz (AT)
(74) Vertreter: Burger, Hannes Alfred
(86) Internationale Anmeldenummer: PCT/AT2023/060204
(87) Internationale Veröffentlichungsnummer: WO 2024/000003

(56) Entgegenhaltungen:
- EP-A1- 3 272 680
- US-A1- 2002 053 535
- US-A1- 2021 300 682

## Beschreibung

Die Erfindung betrifft ein Verfahren zum automatischen Sequenzieren von Waren und ein Kommissioniersystem, wie in den Ansprüchen 1 und 18 beschrieben.

Ein Kommissioniersystem und ein Verfahren der genannten Art sind aus dem Stand der Technik grundsätzlich bekannt. Beispielsweise offenbart die EP 2 560 899 B1 dazu eine Kommissionieranlage und ein Verfahren zum Kommissionieren von Packstücken mit einer Entnahmeeinrichtung zur Entnahme von Packstücken aus einem Lager, einer Puffereinrichtung zum Puffern der entnommenen Packstücke und einer Abgabeeinrichtung, durch welche gepufferte Packstücke gemäß einem bestimmten Kommissionierauftrag von der Puffereinrichtung abgezogen werden. Die Puffereinrichtung kann zumindest eine Sammelbahn aufweisen, auf welcher die gepufferten Packstücke gesammelt werden.

Nachteilig an der EP 2 560 899 B1 und an andere bekannten Systemen zum automatischen Sequenzieren von Waren ist, dass die zur Bildung einer vorgegebenen Reihenfolge der Waren in einem Kommissioniersystem nötigen Einrichtungen sehr teuer sind, jedoch ineffizient betrieben werden.

Die US 2002/053535 A1 offenbart ein Verfahren zum automatischen Sequenzieren von Waren in einem Kommissioniersystem mit
einem Lager, in welchem Waren gelagert sind und welches eine Auslagerfördertechnik umfasst,
einer ersten Sortiervorrichtung, welche mehrere fördertechnisch parallele Pufferförderlinien und je Pufferförderlinie zugeordnet eine eingangsseitige Übergabevorrichtung und je Pufferförderlinie zugeordnet eine ausgangseitige Übergabevorrichtung aufweist,
einer ersten Fördertechnik, welche das Lager und die erste Sortiervorrichtung verbindet,
einer zweiten Sortiervorrichtung, welche der ersten Sortiervorrichtung nachgeschaltet ist,
einer zweiten Fördertechnik, welche die erste Sortiervorrichtung und die zweite Sortiervorrichtung verbindet,
einem Kommissionierbereich, welcher der zweiten Sortiervorrichtung nachgeschaltet ist,
einer dritten Fördertechnik, welche die zweite Sortiervorrichtung und den Kommissionierbereich verbindet, und
einem Steuersystem, welches einen Steuerrechner umfasst und welches mit der ersten Sortiervorrichtung und zweiten Sortiervorrichtung verbunden ist,
umfassend die Schritte:
Erfassen von mehreren Aufträgen, die jeweils zumindest eine Ware umfassen, im Steuerrechner,
Bilden einer im Kommissionierbereich gewünschten Auftragsreihenfolge der Aufträge und einer Warenreihenfolge der Waren innerhalb jedes Auftrags der Aufträge im Steuerrechner,
Bilden einer Gesamt-Warenreihenfolge durch Aneinanderreihen der Aufträge gemäß der gewünschten Auftragsreihenfolge im Steuerrechner,
Segmentieren der Gesamt-Warenreihenfolge in Waren-Gruppen mit jeweils einer vorgebbaren Anzahl von Waren unabhängig von Auftragsgrenzen und Bilden einer Gruppen-Reihenfolge der Waren-Gruppen entsprechend der Gesamt-Warenreihenfolge im Steuerrechner, wobei die Anzahl der Waren in einer Waren-Gruppe maximal der Anzahl der Waren entspricht, welche in der zweiten Sortiervorrichtung in eine beliebige Reihenfolge gebracht werden können,
Bilden einer Auslager-Gruppe, welche aufsteigend sortierte Waren-Gruppen der Gruppen-Reihenfolge umfasst, für deren Waren bei einer Übergabe in die erste Sortiervorrichtung freie Kapazität in der ersten Sortiervorrichtung verfügbar sein wird, im Steuerrechner,
Auslagern der von der Auslager-Gruppe umfassten Waren aus dem Lager mittels der Auslagerfördertechnik,
Transportieren der von der Auslager-Gruppe umfassten Waren zur ersten Sortiervorrichtung mittels der ersten Fördertechnik,
selektive Übergabe der Waren der Auslager-Gruppe von der ersten Fördertechnik auf die Pufferförderlinien mittels der eingangsseitigen Übergabevorrichtungen, wobei Waren einer Waren-Gruppe der Auslager-Gruppe in einen freien Pufferbereich auf zumindest eine der Pufferförderlinien übergeben werden und wobei die Waren der Waren-Gruppe in der zumindest einen Pufferförderlinie in beliebiger Reihenfolge einander direkt benachbart angeordnet sind,
Übergabe der an die Pufferförderlinien übergebenen Waren der Waren-Gruppen in der Gruppen-Reihenfolge von den Pufferförderlinien an die zweite Fördertechnik mittels der ausgangsseitigen Übergabevorrichtungen,
Transportieren der Waren der Waren-Gruppen in der Gruppen-Reihenfolge zu der zweiten Sortiervorrichtung mittels der zweiten Fördertechnik,
Transportieren der Waren in der Auftrags-Reihenfolge von der zweiten Sortiervorrichtung in den Kommissionierbereich mittels der dritten Fördertechnik.

Eine Aufgabe der Erfindung ist es daher, ein verbessertes Verfahren zum automatischen Sequenzieren von Waren und ein verbessertes Kommissioniersystem anzugeben. Insbesondere sollen die zur Bildung einer vorgegebenen Reihenfolge der Waren in einem Kommissioniersystem nötigen Einrichtungen effizient betrieben werden.

Die Aufgabe der Erfindung wird mit einem mehrstufigen Verfahren zum automatischen Sequenzieren von Waren in einem Kommissioniersystem gemäß Anspruch 1 gelöst.

Die Aufgabe der Erfindung wird auch durch ein Kommissioniersystem gemäß Anspruch 18 gelöst.

Die technische Wirkung der Segmentierung der Gesamt-Warenreihenfolge in Waren-Gruppen mit jeweils einer beliebigen Anzahl von Waren unabhängig von Auftragsgrenzen besteht insbesondere darin, dass die zweite Sortiervorrichtung optimiert betrieben werden kann, das heißt nahe oder an der maximalen Sortierkapazität. "Optimiert" bedeutet im gegebenen Zusammenhang insbesondere, dass eine Waren-Gruppe so festgelegt werden kann, dass die Anzahl der von ihr umfassten Waren genau der Anzahl der Waren entspricht, welche in der zweiten Sortiervorrichtung in einem (einzigen) Sortiervorgang in jede beliebige Reihenfolge gebracht werden können. "Optimiert" bedeutet insbesondere auch, dass im Schritt e) eine Auslager-Gruppe gebildet werden kann, welche jene der aufsteigend sortierten aufsteigend sortierte Waren-Gruppen der Gruppen-Reihenfolge umfasst, für deren Waren bei einer Übergabe in die erste Sortiervorrichtung freie Kapazität in der ersten Sortiervorrichtung verfügbar sein wird.

Durch eine Loslösung von Auftragsgrenzen und eine Segmentierung der Gesamt-Warenreihenfolge unabhängig von Auftragsgrenzen können also sowohl die erste Sortiervorrichtung als auch die zweite Sortiervorrichtung optimiert betrieben werden. Das heißt, dass deren Effizienz gegenüber dem Stand der Technik gesteigert werden kann. Bei der aus dem Stand der Technik bekannten auftragsweisen Bearbeitung sind Sortiervorrichtungen, da sie für den größten möglichen Auftrag ausgelegt werden müssen, für die Mehrzahl der übrigen Fälle zu groß und werden daher nur ineffizient betrieben.

Ein "Auftrag" im Sinne dieser Offenbarung kann beispielsweise einem Kunden zugeordnet sein und daher einen "Kundenauftrag" bilden. Die Waren dieses Kundenauftrags können ein Versandladehilfsmittel belegen, mehrere Versandladehilfsmittel oder auch nur einen Teil eines Versandladehilfsmittels (beispielsweise, wenn auf einer Palette Waren mehrerer Kundenaufträge zusammengefasst werden). Ein "Auftrag" kann aber auch einem Versandladehilfsmittel zugeordnet sein und daher Waren umfassen, die in oder auf dieses Versandladehilfsmittel geladen werden sollen. Ein solcher Auftrag kann Waren eines oder mehrerer Kunden umfassen.

Die im Schritt b) gebildete und im Kommissionierbereich gewünschte Auftragsreihenfolge entspricht nicht zwingend der Eingangsreihenfolge der Aufträge, sondern kann entsprechend einer Priorität der Aufträge oder basierend auf einem Zeitpunkt, an dem ein Auftrag fertiggestellt sein muss, (d.h. zum Beispiel basierend auf einem Ausliefertermin) bestimmt werden. Die Warenreihenfolge kann eine im Kommissionierbereich gewünschte Warenreihenfolge sein, dies ist aber nicht zwingend. In einer Variante des vorgeschlagenen Verfahrens beziehungsweise Kommissioniersystems ist im Kommissionierbereich keine bestimmte Warenreihenfolge innerhalb eines Auftrags gefordert. Für den Begriff "Aneinanderreihen der Aufträge" kann generell synonymisch auch die Angabe "Verketten der Aufträge" verwendet werden. Eine Waren-Gruppe kann Waren eines oder mehrerer Aufträge umfassen. Die Waren eines Auftrags können von einer oder mehreren Waren-Gruppen umfasst sein.

Die Auslagerfördertechnik kann insbesondere Regalbediengeräte (Einebenenregalbediengeräte oder Mehrebenenregalbediengeräte) sowie Shuttles in einer oder mehreren Regalgassen umfassen. Die oben vorgeschlagene Vorgangsweise erlaubt im Schritt f) auch die chaotische Auslagerung von Waren. Dadurch kann die Auslagerleistung der Auslagerfördertechnik optimiert werden, beispielsweise wenn die Waren im Hinblick auf einen zeitoptimierten oder wegoptimierten Betrieb von Regalbediengeräten oder Shuttles der Auslagerfördertechnik gereiht werden.

"Fördertechnisch parallel" oder "im Sinne eines Förderstroms parallel" bedeutet nicht zwangsläufig "geometrisch parallel verlaufend", sondern lediglich, dass sich ein Förderstrom in mehrere parallele Förderströme (die im gegenständlichen Fall durch die Pufferförderlinien verlaufen) aufteilt. Die Pufferförderlinien können, müssen aber nicht geometrisch parallel verlaufend angeordnet sein. Die Pufferförderlinien können alle gleich lang sein und gleich viele Waren aufnehmen, sie können aber auch unterschiedlich lang sein und unterschiedlich viele Waren aufnehmen.

Die eingangsseitige Übergabevorrichtung kann durch eine entlang der ersten Fördervorrichtung angeordnete Einschleusevorrichtung gebildet sein, zum Beispiel durch eine Röllchenweiche, einen Riemenumsetzer oder eine Abschiebevorrichtung (Pusher). Die ausgangseitige Übergabevorrichtung kann durch eine entlang der zweiten Fördervorrichtung angeordnete Ausschleusvorrichtung gebildet sein, zum Beispiel durch Förderrollen der Pufferförderlinie, eine Röllchenweiche oder einen Riemenumsetzer.

Die Angabe "einander direkt benachbart angeordnete Waren einer Waren-Gruppe" bedeutet insbesondere, dass die Waren der betreffenden Waren-Gruppe unvermischt mit Waren einer anderen Waren-Gruppe angeordnet sind (sofern eine Pufferförderlinie überhaupt zur Aufnahme mehrerer Waren-Gruppen vorgesehen ist).

Das Bilden einer Auslager-Gruppe im Schritt e) kann erfolgen, wenn entsprechende Kapazität in der ersten Sortiervorrichtung tatsächlich verfügbar ist oder auch prädiktiv oder vorausschauend, wenn bei einer Übergabe der Waren der Auslager-Gruppe in die erste Sortiervorrichtung entsprechende Kapazität in der ersten Sortiervorrichtung (voraussichtlich) verfügbar sein wird.

Der Kommissionierbereich kann insbesondere eine manuell und/oder automatisch betriebene Kommissionierstation aufweisen. Das Verladen der Waren in oder auf Zielladehilfsmittel im Schritt m) kann manuell oder mit einer Verladetechnik erfolgen. Bei der manuellen Verladung wird dem betreffenden Arbeiter, insbesondere automatisch, angezeigt, welche Waren er in oder auf ein Versandladehilfsmittel ablegen soll. Eine entsprechende Ausgabe kann optisch (z.B. über einen Bildschirm, Anzeigeleuchten oder Datenbrillen) und/oder akustisch (z.B. über einen Lautsprecher oder Kopfhörer) erfolgen. Die Verladetechnik kann für die automatische Verladung auch einen oder mehrere Verladeroboter aufweisen. Im Schritt m) können pro Auftrag ein oder mehrere Zielladehilfsmittel, z.B. ein oder mehrere Versandladehilfsmittel, vorgesehen sein.

Das "Steuersystem" kann zusätzlich zum Steuerrechner noch weitere Bestandteile aufweisen, die zur Ausführung des vorgeschlagenen Verfahrens nötig sind. Beispielsweise können dies Datenleitungen oder Funkstrecken zwischen dem Steuerrechner und den im Kommissioniersystem vorhandenen Aktoren sein, also beispielsweise Datenleitungen oder Funkstrecken zwischen dem Steuerrechner und der Auslagerfördertechnik, der ersten Sortiervorrichtung, der ersten Fördertechnik, der zweiten Sortiervorrichtung, der zweiten Fördertechnik, dem Kommissionierbereich und der dritten Fördertechnik. Die Schritte f) bis m) können vom Steuerrechner angestoßen werden. Das Steuern dieser Schritte f) bis m) kann dann zum Beispiel von einer lokalen Sub-Steuerung übernommen werden, beispielsweise einer Sub-Steuerung der Auslagerfördertechnik, einer Sub-Steuerung der ersten Sortiervorrichtung, einer Sub-Steuerung der ersten Fördertechnik, einer Sub-Steuerung der zweiten Sortiervorrichtung, einer Sub-Steuerung der zweiten Fördertechnik, einer Sub-Steuerung des Kommissionierbereichs oder einer Sub-Steuerung der dritten Fördertechnik. Die Schritte f) bis m) können aber auch direkt vom Steuerrechner gesteuert werden. Eine lokale Sub-Steuerung ist dann nicht nötig. Denkbar sind auch Mischformen, bei denen einige der Schritte f) bis m) vom Steuerrechner angestoßen werden und andere der Schritte f) bis m) vom Steuerrechner direkt gesteuert werden.

Die Waren können mittels der ersten Fördertechnik, mittels der zweiten Fördertechnik und mittels der dritten Fördertechnik kontinuierlich oder diskontinuierlich gefördert werden. Bei der diskontinuierlichen Förderung können die Waren mittels der ersten Fördertechnik, mittels der zweiten Fördertechnik und/oder mittels der dritten Fördertechnik gestaut werden. Die erste Fördertechnik, die zweite Fördertechnik und/oder die dritte Fördertechnik kann daher zeit- oder abschnittsweise als Puffer wirken.

Generell erfolgt die Sortierung in dem vorgestellten Verfahren beziehungsweise bei dem vorgestellten Kommissioniersystem in zwei Stufen, weitere Sortierstufen sind aber möglich. Streng genommen kann eine Vorsortierung in der ersten Sortierstufe nur dann erfolgen, wenn zumindest eine Auslagergruppe mehr als eine Waren-Gruppe umfasst. Insbesondere ist es daher von Vorteil, wenn eine Auslagergruppe mehrere Waren-Gruppen oder wenn alle Auslagergruppen mehr als eine Waren-Gruppe umfassen.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn Waren-Gruppen, welche Waren jeweils nur eines Auftrags enthalten, die zweite Sortiervorrichtung im Schritt k) ohne Sortiervorgang durchlaufen oder über einen Bypass umgehen. Dadurch braucht die zweite Sortiervorrichtung nicht unnötig belastet werden, wenn im Kommissionierbereich keine bestimmte Warenreihenfolge innerhalb eines Auftrags gefordert ist. Die zweite Sortiervorrichtung kann daher noch effizienter betrieben werden.

Günstig ist es aber auch, wenn
im Schritt b) zusätzlich eine im Kommissionierbereich gewünschte Warenreihenfolge der Waren innerhalb jedes Auftrags der Aufträge im Steuerrechner gebildet wird,
im Schritt c) eine im Kommissionierbereich gewünschte Gesamt-Warenreihenfolge durch Aneinanderreihen der Aufträge gebildet wird,
im Schritt k) die Gesamt-Warenreihenfolge durch gruppenweises Sortieren der Waren, Waren-Gruppe für Waren-Gruppe, in der Sortiervorrichtung hergestellt wird, und
im Schritt l) die Waren mit der dritten Fördertechnik in der Gesamt-Warenreihenfolge in den Kommissionierbereich transportiert werden.

Bei dieser Ausführungsvariante liegt also eine im Kommissionierbereich gewünschte Warenreihenfolge der Waren innerhalb eines Auftrags vor. Das auftragsweise Gruppieren der Waren entsprechend der Auftrags-Reihenfolge erfolgt bei dieser Ausführungsvariante implizit durch Herstellen der gewünschten Gesamt-Warenreihenfolge. Ein expliziter Schritt zum auftragsweisen Gruppieren der Waren entsprechend der Auftrags-Reihenfolge ist dazu nicht nötig.

Vorteilhaft ist es weiterhin, wenn jede Waren-Gruppe dieselbe Anzahl an Waren aufweist. Dadurch kann die Segmentierung der Gesamt-Warenreihenfolge im Schritt d) auf einfache Weise erfolgen. Diese Vorgangsweise empfiehlt sich besonders dann, wenn alle Pufferförderlinien gleich lang sind beziehungsweise dieselbe Anzahl an Waren aufnehmen können.

Besonders vorteilhaft ist es, wenn die Anzahl an Waren in einer Waren-Gruppe genau der Anzahl an Waren entspricht, welche in der zweiten Sortiervorrichtung in einem (einzigen) Sortiervorgang in jede beliebige Reihenfolge gebracht werden können. Dadurch wird die zweite Sortiervorrichtung an der maximalen Sortierkapazität und damit besonders effizient betrieben.

Günstig ist es, wenn die Waren einer Waren-Gruppe der Auslager-Gruppe in einen freien Bereich genau einer der Pufferförderlinien eingelagert werden. Auf diese Weise wird vermieden, dass die Waren einer Waren-Gruppe über mehrere Pufferförderlinien eingelagert werden. Dadurch wird der Ablauf bei der Sortierung in der ersten Sortierstufe vereinfacht.

Vorteilhaft ist es weiterhin, wenn jede der Pufferförderlinien Waren genau einer Waren-Gruppe aufnimmt. Dadurch wird der Ablauf bei der Sortierung in der ersten Sortierstufe ebenfalls vereinfacht.

Besonders vorteilhaft ist es in obigem Fall, wenn das Auslagern der von der Auslager-Gruppe umfassten Waren im Schritt f) in chaotischer Reihenfolge erfolgt. Dadurch kann die Auslagerleistung der Auslagerfördertechnik optimiert werden.

Vorteilhaft ist es weiterhin, wenn jede der Pufferförderlinien Waren mehrerer ganzer Waren-Gruppen aufnimmt, wobei die Waren-Gruppen eine Ordnungsnummer entsprechend der Gruppen-Reihenfolge aufweisen und wobei Waren von Waren-Gruppen mit niedrigerer Ordnungsnummer in der jeweiligen Pufferlinie weiter stromabwärts eingelagert werden als Waren von Waren-Gruppen mit höherer Ordnungsnummer. Eine Pufferförderlinie kann in diesem Fall also Waren von zwei, drei oder mehr Waren-Gruppen aufnehmen. Durch die vorgeschlagenen Maßnahmen kann ein geforderter Formfaktor für die erste Sortiervorrichtung leichter erreicht werden. Zudem kann ein konstanter Förderstrom am Ausgang der ersten Sortiervorrichtung auch dann aufrechterhalten werden, wenn eine Nachförderung von Waren in die erste Sortiervorrichtung vergleichsweise viel Zeit in Anspruch nimmt.

In einer weiteren Ausführungsvariante kann vorgesehen sein, dass die Waren einiger der Waren-Gruppen der Auslager-Gruppe in freie Bereiche mehrerer der Pufferförderlinien eingelagert werden. Dadurch können die Pufferförderlinien unter bestimmten Voraussetzungen besser ausgenützt werden. Insbesondere trifft dies dann zu, wenn ein Quotient aus einer Warenkapazität einer Pufferförderlinie der Pufferförderlinien und der Anzahl der Waren in einer Waren-Gruppe nicht ganzzahlig ist, wobei die Waren-Gruppen eine Ordnungsnummer entsprechend der Gruppen-Reihenfolge aufweisen und wobei Waren von Waren-Gruppen mit niedrigerer Ordnungsnummer in der jeweiligen Pufferlinie weiter stromabwärts eingelagert werden als Waren von Waren-Gruppen mit höherer Ordnungsnummer. In diesem Fall werden also weniger oder mehr Waren in eine Pufferförderlinie eingelagert, als von einer ganzzahligen Anzahl an Waren-Gruppen umfasst ist.

Wenn in einer Pufferförderlinie mehr als eine Waren-Gruppe eingelagert wird oder eingelagert werden kann, dann ist es von Vorteil, wenn das Auslagern der von der Auslager-Gruppe umfassten Waren im Schritt f) in chaotischer Reihenfolge erfolgt, wobei Waren von jenen Waren-Gruppen, die im Schritt h) hintereinander an eine der Pufferförderlinien übergeben werden, gemäß der Gruppen-Reihenfolge ausgelagert werden. Bei dieser Variante wird das Prinzip der chaotischen Auslagerung der Waren dahingehend durchbrochen, als Waren-Gruppen, die in einer Pufferförderlinie hintereinander zu liegen kommen, ohne Verletzung der Gruppen-Reihenfolge ausgelagert werden. Ansonsten kommt das chaotische Auslagerungsprinzip zum Tragen. Das bedeutet, dass die Waren einer ersten Waren-Gruppe, die in einer Pufferförderlinie weiter stromabwärts eingelagert wird, vor Waren einer zweiten Waren-Gruppe, die in der Pufferförderlinie weiter stromaufwärts eingelagert wird, aus dem Lager ausgelagert werden. Innerhalb der beiden Waren-Gruppen können die Waren aber jeweils in chaotischer Reihenfolge vorliegen bzw. ausgelagert werden. Es ist sogar möglich, dass Waren anderer, dritter Waren-Gruppen mit den Waren der ersten und zweiten Waren-Gruppe vermischt sind.

Wenn in einer Pufferförderlinie mehr als eine Waren-Gruppe eingelagert wird oder eingelagert werden kann, dann ist es alternativ auch von Vorteil, wenn das Auslagern der von der Auslager-Gruppe umfassten Waren im Schritt f) in chaotischer Reihenfolge erfolgt, wobei eine Auslager-Gruppe im Schritt e) maximal (insbesondere genau) so viele Waren-Gruppen aufweist wie Pufferförderlinien freie Kapazität für die Aufnahme von Waren je einer Waren-Gruppe bei einer Übergabe der Waren der Auslager-Gruppe in die erste Sortiervorrichtung aufweisen werden. Hier wird von vornherein vermieden, dass eine Auslager-Gruppe mehrere Waren-Gruppen aufweist, die hintereinander an eine einzige Pufferförderlinie übergeben werden. Daher kann eine chaotische Auslagerung von Waren in diesem Fall ohne Einschränkung durchgeführt werden. Ein initiales Befüllen der ersten Sortiervorrichtung kann vorteilhaft schrittweise mittels mehrerer Auslager-Gruppen erfolgen. Insbesondere können genauso viele Auslager-Gruppen vorgesehen werden wie in einer (der längsten) Pufferförderlinie Waren-Gruppen aufgenommen werden können.

Generell kann das vorgestellte Verfahren auf Kommissioniersysteme bezogen sein, in denen die Waren jeweils aus einem Stück bestehen, beziehungsweise kann den vorgestellten Abläufen je ein Stück einer Ware zugrunde gelegt werden. Dies ist aber keine zwingende Bedingung. Denkbar ist vielmehr auch, dass
eine Ware in der Gesamt-Warenreihenfolge ein beliebiges Stück von mehreren Waren derselben Warentype ist, welche in oder auf einem Ladehilfsmittel lagern,
die Schritte f) bis l) durch entsprechende Manipulation des Ladehilfsmittels erfolgen, und
der Schritt m) die Entnahme der Ware aus oder von dem Ladehilfsmittel umfasst.

Das bedeutet also, dass in dem vorgestellten Verfahren anstelle einer Ware auch ein Ladehilfsmittel mit mehreren Stücken der betreffenden Ware vorgesehen werden kann. An dem Sortierverfahren ändert dies im Grunde aber nichts, insbesondere, wenn jeweils ein Stück einer Ware aus den betreffenden Ladehilfsmitteln entnommen wird. Werden im Schritt m) mehrere Stücke einer Ware benötigt, dann kann das Verfahren insofern vereinfacht werden, als eben mehrere Stücke einer Ware aus einem Ladehilfsmittel entnommen werden, ohne dass dazu mehrere Plätze in der Warenreihenfolge zu belegen sind. Stattdessen kann die Warenreihenfolge an der entsprechenden Stelle einen Multiplikator aufweisen, der angibt, wie viele Stück der betreffenden Warentype im Schritt m) zu entnehmen sind. Die Angabe kann also lauten "3 Stück der Warentype A". Es ist jedoch sicherzustellen, dass das betreffende Ladehilfsmittel dann zumindest drei Stück der Warentype A beinhaltet und im Schritt m) Stück der Warentype A aus oder von dem Ladhilfsmittel entnommen und in oder auf das Zielladehilfsmittel umgeladen werden, da es ansonsten zu Störungen im Kommissionierablauf kommen kann.

In diesem Fall kann von einer "Warentypenreihenfolge" anstatt von einer "Warenreihenfolge" gesprochen werden. Dementsprechend kann der Begriff "Warenreihenfolge" in der obigen Offenbarung gedanklich durch den Begriff "Warentypenreihenfolge" ersetzt werden. Denkbar sind auch Mischformen, bei denen ein Teil der Waren einstückig vorliegen und ohne Ladehilfsmittel manipuliert werden und ein anderer Teil der Waren in Ladehilfsmitteln transportiert werden. Dementsprechend kann der Begriff "Warenreihenfolge" in der obigen Offenbarung gedanklich durch den Begriff "gemischte Waren- und Warentypenreihenfolge" ersetzt werden.

Angemerkt wird jedoch, dass die Warenreihenfolge in jedem der angesprochenen Fälle mehrere Instanzen einer Ware oder Warentype aufweisen kann, wenn mehrere Stücke der Ware oder Warentype in unterschiedlichen Kommissionierstationen oder auch in einer Kommissionierstationen zu unterschiedlichen Zeitpunkten benötigt werden. Beispielsweise kann dieser Fall eintreten, wenn mehrere Stücke der betreffenden Ware oder Warentype in einem Packmuster für eine Palette an unterschiedlichen Stellen benötigt werden beziehungsweise vorgesehen sind.

Vorteilhaft kann eine nach dem Schritt m) im oder auf dem Ladehilfsmittel verbleibende Restmenge an Waren in das Lager rückgelagert werden. Dadurch kann die Restmenge an Waren für einen späteren Kommissioniervorgang verfügbar gemacht werden, beispielsweise wenn diese in einem späteren Auftrag wieder angefordert wird.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Beispiel eines Kommissioniersystems;
- Fig. 2: eine beispielhafte Auftragsreihenfolge mehrerer aneinander gereihter Aufträge;
- Fig. 3: eine beispielhafte Segmentierung der Auftragsreihenfolge aus Fig. 2 in mehrere Waren-Gruppen;
- Fig. 4: eine mehrere Waren-Gruppen umfassende Auslagergruppe;
- Fig. 5: eine beispielhafte und chaotische Warenreihenfolge der Waren aus Fig. 2 nach dem Auslagern aus dem Lager;
- Fig. 6: das Kommissioniersystem aus Fig. 1 in einem Zustand, in dem Waren der Abfolge aus Fig. 5 teilweise in die erste Sortiervorrichtung übergeben wurden;
- Fig. 7: das Kommissioniersystem aus Fig. 1 in einem Zustand, in dem alle Waren der Abfolge aus Fig. 5 in die erste Sortiervorrichtung übergeben wurden;
- Fig. 8: eine beispielhafte Warenreihenfolge der Waren aus Fig. 2 nach dem Auslagern aus der ersten Sortiervorrichtung;
- Fig. 9: eine beispielhafte zweite Sortiervorrichtung beim Sortieren der zweiten Waren-Gruppe der in Fig. 8 dargestellten Warenreihenfolge;
- Fig. 10: die zweite Sortiervorrichtung aus Fig. 9 nach dem Sortieren der zweiten Waren-Gruppe der in Fig. 8 dargestellten Warenreihenfolge;
- Fig. 11: eine beispielhafte Warenreihenfolge der Waren aus Fig. 2 nach dem Verlassen der zweiten Sortiervorrichtung;
- Fig. 12: das Kommissioniersystem aus Fig. 7, nachdem zwei Waren-Gruppen die erste Sortiervorrichtung wieder verlassen haben;
- Fig. 13: eine beispielhafte Auftragsreihenfolge weiterer aneinander gereihter Aufträge;
- Fig. 14: eine beispielhafte Segmentierung der Auftragsreihenfolge aus Fig. 13 in mehrere Waren-Gruppen;
- Fig. 15: eine mehrere Waren-Gruppen umfassende zweite Auslagergruppe;
- Fig. 16: das Kommissioniersystem aus Fig. 12, nachdem zwei weitere Waren-Gruppen an die erste Sortiervorrichtung übergeben wurden;
- Fig. 17: ein Beispiel eines Kommissioniersystems mit Pufferförderlinien, die jeweils zwei Waren-Gruppen aufnehmen können;
- Fig. 18: ein Beispiel eines Kommissioniersystems mit Pufferförderlinien, die jeweils mehr als zwei Waren-Gruppen aufnehmen können;
- Fig. 19: wie Fig. 17, jedoch mit einem Bypass zur Umgehung der zweiten Sortiervorrichtung;
- Fig. 20: wie Fig. 17, jedoch mit einer Rückförderbahn zum Lager.

Einführend sei festgehalten, dass in den unterschiedlich beschriebenen Ausführungsformen gleiche Teile mit gleichen Bezugszeichen bzw. gleichen Bauteilbezeichnungen versehen sind, wobei die in der gesamten Beschreibung enthaltene Offenbarung sinngemäß auf gleiche Teile mit gleichen Bezugszeichen bzw. gleichen Bauteilbezeichnungen übertragen werden kann. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

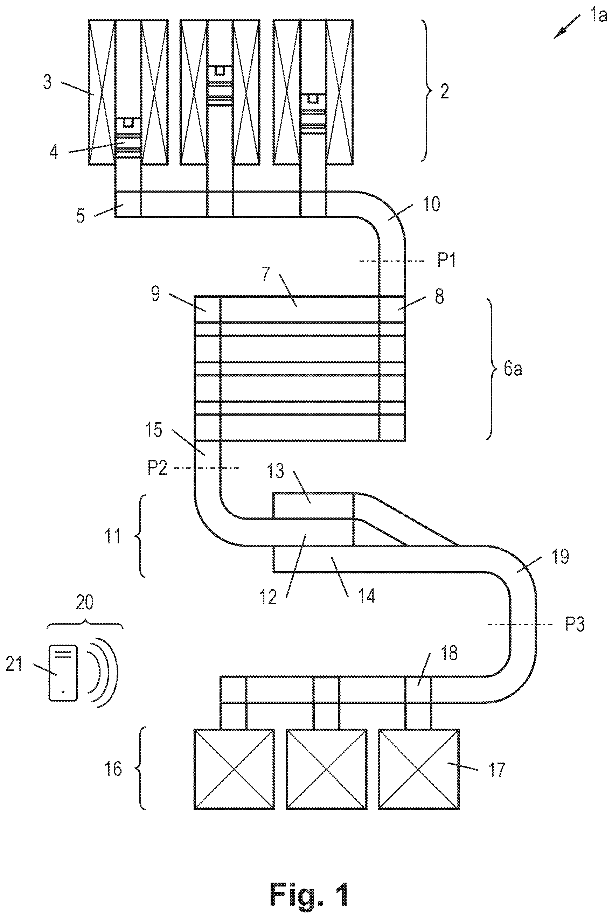

Fig. 1 zeigt ein erstes Beispiel eines Kommissioniersystems 1a in schematischer Darstellung. Das Kommissioniersystem 1a umfasst ein Lager 2, das hier mehrere Lagerregale 3 und eine Auslagerfördertechnik 4 umfasst. Im Bereich des Lagers 2 sind auch ausgangseitige Übergabevorrichtungen 5 angeordnet. In den Lagerregalen 3 lagert im Betrieb des Kommissioniersystems 1a eine Vielzahl an in der Fig. 1 nicht dargestellten Waren. Weiterhin umfasst das Kommissioniersystem 1a eine erste Sortiervorrichtung 6a, welche mehrere fördertechnisch parallele Pufferförderlinien 7 und je Pufferförderlinie 7 zugeordnet eine eingangsseitige Übergabevorrichtung 8 und je Pufferförderlinie 7 zugeordnet eine ausgangseitige Übergabevorrichtung 9 aufweist. Zudem umfasst das Kommissioniersystem 1a eine erste Fördertechnik 10, welche das Lager 2 und die erste Sortiervorrichtung 6a verbindet. Außerdem umfasst das Kommissioniersystem 1a eine zweite Sortiervorrichtung 11, welche der ersten Sortiervorrichtung 6a nachgeschaltet ist. Die zweite Sortiervorrichtung 11 umfasst in diesem Beispiel eine zentrale Zuführbahn 12 sowie zwei seitlich angeordnete Abführbahnen 13 und 14. Das Kommissioniersystem 1a umfasst auch eine zweite Fördertechnik 15, welche die erste Sortiervorrichtung 6a und die zweite Sortiervorrichtung 11 verbindet. Weiterhin umfasst das Kommissioniersystem 1a einen Kommissionierbereich 16, welcher der zweiten Sortiervorrichtung 11 nachgeschaltet ist. Der Kommissionierbereich 16 kann zum Beispiel eine manuell und/oder automatisch betriebene Kommissionierstation 17 oder wie beispielhaft dargestellt mehrere manuell und/oder automatisch betriebene Kommissionierstationen 17 aufweisen, so wie das in der Fig. 1 symbolisch dargestellt ist. Im Bereich der Kommissionierstationen 17 sind auch eingangsseitige Übergabevorrichtung 18 angeordnet. Zudem umfasst das Kommissioniersystem 1a eine dritte Fördertechnik 19, welche die zweite Sortiervorrichtung 6a und den Kommissionierbereich 16 verbindet. Schließlich umfasst das Kommissioniersystem 1a ein Steuersystem 20, welches einen Steuerrechner 21 aufweist und welches zumindest mit der ersten Sortiervorrichtung 6a und zweiten Sortiervorrichtung 11 verbunden ist.

Die Auslagerfördertechnik 4 kann beispielsweise mehrere zwischen den Lagerregalen 3 verfahrende Mehrebenenregalbediengeräte, Einebenenregalbediengeräte sowie Shuttles und dergleichen umfassen. Mit Hilfe der Auslagerfördertechnik 4 können Waren aus den Lagerregalen 3 entnommen und auf die erste Fördertechnik 10 übergeben werden.

Die erste Fördertechnik 10, die zweite Fördertechnik 15, die dritte Fördertechnik 19, Pufferförderlinien 7 der ersten Sortiervorrichtung 6a sowie die zentrale Zuführbahn 12 und die beiden seitlich angeordneten Abführbahnen 13 und 14 der zweiten Sortiervorrichtung 11 können insbesondere als Rollenförderer ausgebildet sein oder diese aufweisen. Alternativ oder zusätzlich können die genannten Einheiten auch durch Förderbänder, Kettenförderer und dergleichen gebildet sein oder diese umfassen.

Die ausgangseitigen Übergabevorrichtungen 5 im Bereich des Lagers 2 können durch entlang der ersten Fördertechnik 10 angeordnete Ausschleusvorrichtungen gebildet sein, zum Beispiel durch Förderrollen einer an die Auslagerfördertechnik 4 anschließenden Lagerförderlinie, eine Röllchenweiche oder einen Riemenumsetzer. Mit Hilfe der Übergabevorrichtungen 5 können von der Auslagerfördertechnik 4 kommende Waren auf die erste Fördertechnik 10 übergeben werden.

Die Pufferförderlinien 7 sind in diesem Beispiel sowohl fördertechnisch parallel verlaufend als auch geometrisch parallel verlaufend. Eine zueinander parallele Ausrichtung der Pufferförderlinien 7 im geometrischen Sinn ist jedoch nicht erforderlich. Es ist ausreichend, wenn sich ein von der ersten Fördertechnik 10 kommender Förderstrom in mehrere parallele, durch die Pufferförderlinien 7 verlaufende Förderströme aufteilt oder aufteilen kann.

Die eingangsseitige Übergabevorrichtung 8 der ersten Sortiervorrichtung 6a kann beispielsweise durch eine entlang der ersten Fördertechnik 10 angeordnete Einschleusevorrichtung gebildet sein, zum Beispiel durch eine Röllchenweiche, einen Riemenumsetzer oder eine Abschiebevorrichtung (Pusher). Mit Hilfe der Übergabevorrichtungen 8 können von der ersten Fördertechnik 10 kommende Waren gezielt auf die Pufferförderlinien 7 übergeben werden. Die ausgangseitige Übergabevorrichtung 9 der ersten Sortiervorrichtung 6a kann durch eine entlang der zweiten Fördertechnik 15 angeordnete Ausschleusvorrichtung gebildet sein, zum Beispiel durch Förderrollen der Pufferförderlinie 7, eine Röllchenweiche oder einen Riemenumsetzer. Mit Hilfe der Übergabevorrichtungen 9 können von den Pufferförderlinien 7 kommende Waren auf die zweite Fördertechnik 15 übergeben werden.

Die eingangsseitige Übergabevorrichtung 18 im Bereich der Kommissionierstationen 17 kann beispielsweise durch eine entlang der dritten Fördertechnik 19 angeordnete Einschleusevorrichtung gebildet sein, zum Beispiel durch eine Röllchenweiche, einen Riemenumsetzer oder eine Abschiebevorrichtung (Pusher). Mit Hilfe der Übergabevorrichtungen 18 können von der dritten Fördertechnik 19 kommende Waren gezielt an die Kommissionierstationen 17 übergeben werden.

Das Steuersystem 20 kann neben dem Steuerrechner 21 noch weitere Bestandteile aufweisen, beispielsweise Funkstrecken zwischen dem Steuerrechner 21 und den im Kommissioniersystem 1a vorhandenen Aktoren, also beispielsweise Funkstrecken zwischen dem Steuerrechner 21 und der Auslagerfördertechnik 4, der ersten Sortiervorrichtung 6a, der ersten Fördertechnik 10, der zweiten Sortiervorrichtung 11, der zweiten Fördertechnik 15, dem Kommissionierbereich 16 und der dritten Fördertechnik 19 so wie das in der Fig. 1 symbolisch angedeutet ist. Für die Kommunikation zwischen dem Steuerrechner 21 und den genannten Einheiten können alternativ oder zusätzlich zu den Funkstrecken auch Datenleitungen vorgesehen sein.

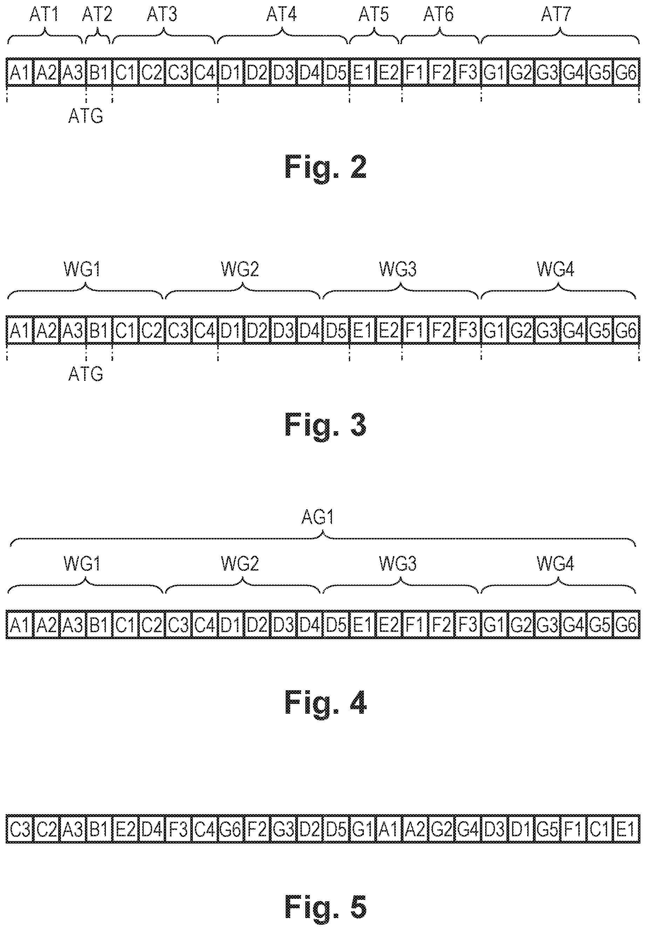

Die Funktion des in der Fig. 1 dargestellten Kommissioniersystems 1a ist nun wie folgt:
In einem Schritt a) werden im Steuerrechner 21 mehrere Aufträge erfasst, die jeweils zumindest eine Ware umfassen. In einem anhand von Fig. 2 illustrierten Beispiel werden sieben Aufträge AT1..AT7 erfasst. Der Auftrag AT1 umfasst die Waren A1..A3, der Auftrag AT2 umfasst die Ware B1, der Auftrag AT3 umfasst die Waren C1..C4, der Auftrag AT4 umfasst die Waren D1..D5, der Auftrag AT5 umfasst die Waren E1..E2, der Auftrag AT6 umfasst die Waren F1..F3 und der Auftrag AT7 umfasst die Waren G1..G6. Ein "Auftrag" im Sinne dieser Offenbarung kann beispielsweise einem Kunden zugeordnet sein und daher einen "Kundenauftrag" bilden. Die Waren dieses Kundenauftrags können ein Versandladehilfsmittel belegen, mehrere Versandladehilfsmittel oder auch nur einen Teil eines Versandladehilfsmittels (beispielsweise, wenn im Kommissionierbereich 16 auf einer Palette Waren mehrerer Kundenaufträge zusammengefasst werden). Ein "Auftrag" kann aber auch einem Versandladehilfsmittel zugeordnet sein und daher Waren umfassen, die in oder auf dieses Versandladehilfsmittel geladen werden sollen. Ein solcher Auftrag kann Waren eines oder mehrerer Kunden umfassen.

In einem Schritt b) wird im Steuerrechner 21 eine im Kommissionierbereich 16 gewünschte Auftragsreihenfolge der Aufträge AT1..AT7 und gegebenenfalls eine im Kommissionierbereich 16 gewünschte Warenreihenfolge der Waren A1..G6 innerhalb jedes Auftrags AT1..AT7 der Aufträge AT1..AT7 gebildet. Die Auftragsreihenfolge entspricht nicht zwingend jener Reihenfolge, in welcher die Aufträge AT1..AT7 im Schritt a) erfasst werden, sondern kann entsprechend der Priorität der Aufträge AT1..AT7 oder basierend auf einem Zeitpunkt, an dem ein Auftrag AT1..AT7 fertiggestellt sein soll, (d.h. zum Beispiel basierend auf einem Ausliefertermin) bestimmt werden. Beispielsweise können die in Fig. 2 dargestellten Aufträge AT1..AT7 im Schritt a) in der Reihenfolge AT3, AT7, AT1, AT4, AT5, AT2, AT6 eingegangen sein und sollen im Kommissionierbereich 16 in der in Fig. 2 dargestellten Reihenfolge AT1, AT2, AT3, AT4, AT5, AT6, AT7 ankommen.

In einem Schritt c) wird im Steuerrechner 21 eine Gesamt-Warenreihenfolge durch Aneinanderreihen der Aufträge AT1..AT7 gemäß der gewünschten Auftragsreihenfolge gebildet. Diese Gesamt-Warenreihenfolge ist in Fig. 2 ebenfalls ersichtlich.

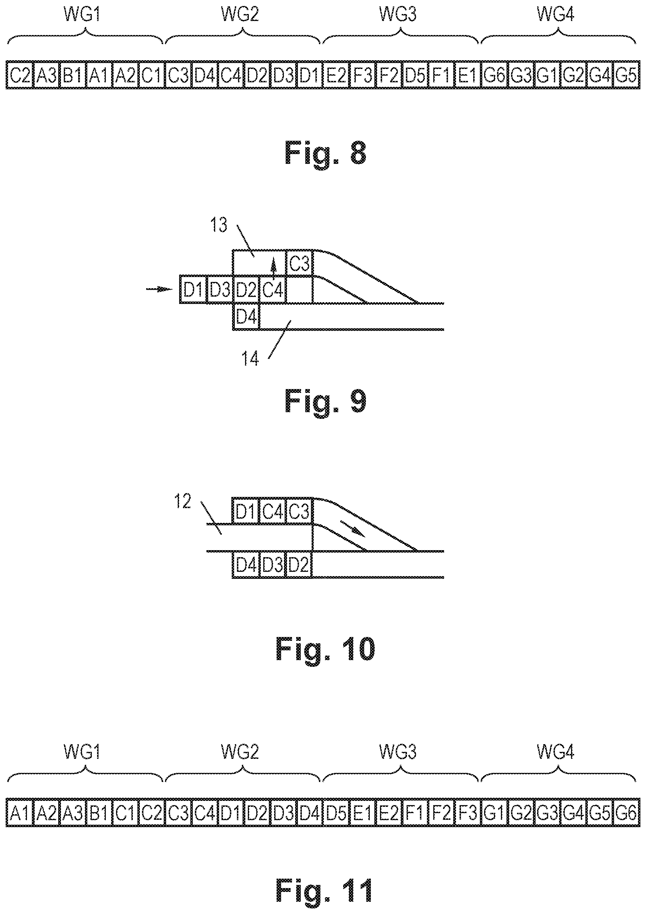

In einem Schritt d) wird die Gesamt-Warenreihenfolge im Steuerrechner 21 in Waren-Gruppen WG1..WG4 mit jeweils einer vorgebbaren Anzahl von Waren A1..G6 unabhängig von Auftragsgrenzen ATG segmentiert, und es wird im Steuerrechner 21 eine Gruppen-Reihenfolge der Waren-Gruppen WG1..WG4 entsprechend der Gesamt-Warenreihenfolge gebildet. Die Anzahl der Waren A1..G6 in einer Waren-Gruppe WG1..WG4 entspricht dabei maximal der Anzahl der Waren A1..G6, welche in der zweiten Sortiervorrichtung 11 in einem Sortiervorgang in eine beziehungsweise in jede beliebige Reihenfolge gebracht werden können. In diesem Beispiel können in der zweiten Sortiervorrichtung 11 maximal sechs Waren A1..G6 in einem Sortiervorgang in eine beliebige Reihenfolge gebracht werden (siehe hierzu auch die Fig. 9 und 10).

Vorzugsweise weist jede Waren-Gruppe WG1..WG4 dieselbe Anzahl an Waren A1..G6 auf und vorzugsweise entspricht die Anzahl an Waren A1..G6 in einer Waren-Gruppe WG1..WG4 genau der Anzahl an Waren A1..G6, welche in der zweiten Sortiervorrichtung 11 in einem Sortiervorgang in eine beziehungsweise in jede beliebige Reihenfolge gebracht werden können (das sind im gegenständlichen Beispiel sechs Waren A1..G6). Dementsprechend umfasst in dem in Fig. 3 dargestellten Beispiel jede der Waren-Gruppen WG1..WG4 sechs Waren A1..G6. Die Waren-Gruppe WG1 umfasst konkret die Waren A1..C2, die Waren-Gruppe WG2 die Waren C3..D4, die Waren-Gruppe WG3 die Waren D5..F3 und die Waren-Gruppe WG4 die Waren G1..G6.

Selbstverständlich sind auch zweite Sortiervorrichtungen 11 denkbar, welche in einem Sortiervorgang eine andere Anzahl an Waren A1..G6 in eine beliebige Reihenfolge bringen können. Weiterhin ist denkbar, dass Waren-Gruppen WG1..WG4 eine unterschiedliche Anzahl an Waren A1..G6 umfassen. Weist die zweite Sortiervorrichtung 11 eine maximale Sortierkapazität von zehn Waren A1..G6 auf, dann kann die Waren-Gruppe WG1 beispielsweise die neun Waren A1..D1, die Waren-Gruppe WG12 die vier Waren D3..E1, die Waren-Gruppe WG3 die fünf Waren E2..G1 und die Waren-Gruppe WG4 die fünf Waren G2..G6 aufweisen.

Wie aus der Fig. 3 erkennbar ist, werden die Waren-Gruppen WG1..WG4 unabhängig von den Auftragsgrenzen ATG, welche die Grenzen zwischen jeweils zwei der Aufträge AT1..AT7 bilden, gebildet. Das heißt, die Grenzen zwischen den Waren-Gruppen WG1..WG4 haben keinerlei Bezug zu den Auftragsgrenzen ATG.

In einem weiteren Schritt e) wird im Steuerrechner 21 eine Auslager-Gruppe AG1 gebildet, welche aufsteigend sortierte Waren-Gruppen WG1..WG4 der Gruppen-Reihenfolge umfasst, für deren Waren A1..G6 bei einer Übergabe in die erste Sortiervorrichtung 6a freie Kapazität in der ersten Sortiervorrichtung 6a verfügbar sein wird. In dem in Fig. 1 dargestellten Zustand ist die erste Sortiervorrichtung 6a leer. Vorteilhaft ist es, wenn die Auslager-Gruppe AG1 so viele Waren-Gruppen WG1..WG4 umfasst, für deren Waren A1..G6 bei einer Übergabe in die erste Sortiervorrichtung 6a freie Kapazität in der ersten Sortiervorrichtung 6a verfügbar sein wird. In dem in Fig. 4 illustrierten Beispiel umfasst die Auslager-Gruppe AG1 demnach die Waren-Gruppen WG1..WG4.

Das Bilden einer Auslager-Gruppe AG1 kann im Schritt e) generell dann erfolgen, wenn entsprechende Kapazität in der ersten Sortiervorrichtung 6a aktuell verfügbar ist oder auch prädiktiv beziehungsweise vorausschauend, wenn bei einer Übergabe der Waren A1..G6 der Auslager-Gruppe AG1 in die erste Sortiervorrichtung 6a entsprechende Kapazität in der ersten Sortiervorrichtung 6a (voraussichtlich) verfügbar sein wird.

In einem Schritt f) werden die von der Auslager-Gruppe AG1 umfassten Waren A1..G6 mittels der Auslagerfördertechnik 4 aus dem Lager 2 ausgelagert. Dazu schickt der Steuerrechner 21 einen entsprechenden Befehl an die Auslagerfördertechnik 4. Denkbar ist, dass die Auslagerfördertechnik 4 den Befehl autonom ausführt, also die Waren A1..G6 autonom und ohne weiteres Zutun des Steuerrechners 21 auslagert. Denkbar wäre aber auch, dass der Auslagervorgang vom Steuerrechner 21 nicht nur angestoßen, sondern auch aktiv gesteuert wird.

In einem Schritt g) werden die von der Auslager-Gruppe AG1 umfassten Waren A1..G6 mittels der ersten Fördertechnik 10 zur ersten Sortiervorrichtung 6a gefördert. Dazu schickt der Steuerrechner 21 einen entsprechenden Befehl an die erste Fördertechnik 10. Denkbar ist, dass die erste Fördertechnik 10 den Befehl autonom ausführt, also die Waren A1..G6 autonom und ohne weiteres Zutun des Steuerrechners 21 fördert. Denkbar wäre aber auch, dass die Warenförderung vom Steuerrechner 21 nicht nur angestoßen, sondern auch aktiv gesteuert wird.

Das Auslagern der von der Auslager-Gruppe AG1 umfassten Waren A1..G6 kann insbesondere in chaotischer Reihenfolge erfolgen, so wie das in der Fig. 5 illustriert ist. Dadurch kann die Auslagerleistung der Auslagerfördertechnik 4 optimiert werden, beispielsweise wenn die Waren A1..G6 im Hinblick auf einen zeitoptimierten oder wegoptimierten Betrieb der Auslagerfördertechnik 4 gereiht werden. Die Fig. 5 zeigt die Reihenfolge der Waren A1..G6 an einem Punkt P1 auf der ersten Fördertechnik 10. Wie aus der Fig. 5 gut erkennbar ist, passieren die Waren A1..G6 den Punkt P1 in keiner besonderen, sondern in chaotischer Reihenfolge.

In einem weiteren Schritt h) werden die Waren A1..G6 der Auslager-Gruppe AG1 mittels der eingangsseitigen Übergabevorrichtungen 8 selektiv von der ersten Fördertechnik 10 auf die Pufferförderlinien 7 übergeben. Dazu schickt der Steuerrechner 21 entsprechende Befehle an die Übergabevorrichtungen 8. Denkbar ist, dass die Übergabevorrichtungen 8 die Befehle autonom ausführen, also die Waren A1..G6 autonom und ohne weiteres Zutun des Steuerrechners 21 selektiv von der ersten Fördertechnik 10 auf die Pufferförderlinien 7 übergeben. Denkbar wäre aber auch, dass die Warenübergabe vom Steuerrechner 21 nicht nur angestoßen, sondern auch aktiv gesteuert wird.

Waren A1..G6 einer Waren-Gruppe WG1..WG4 der Auslager-Gruppe AG1 werden dabei in einen freien Pufferbereich auf zumindest eine der Pufferförderlinien 7 übergeben, wobei die Waren A1..G6 der Waren-Gruppe WG1..WG4 in der zumindest einen Pufferförderlinie 7 in beliebiger Reihenfolge einander direkt benachbart angeordnet sind. Die Waren A1..G6 werden auf den Pufferförderlinien 7 stromabwärts gefördert. Dazu schickt der Steuerrechner 21 entsprechende Befehle an die Pufferförderlinien 7. Denkbar ist, dass die Pufferförderlinien 7 die Befehle autonom ausführen, also die Waren A1..G6 autonom und ohne weiteres Zutun des Steuerrechners 21 transportieren. Denkbar wäre aber auch, dass die Warenförderung vom Steuerrechner 21 nicht nur angestoßen, sondern auch aktiv gesteuert wird.

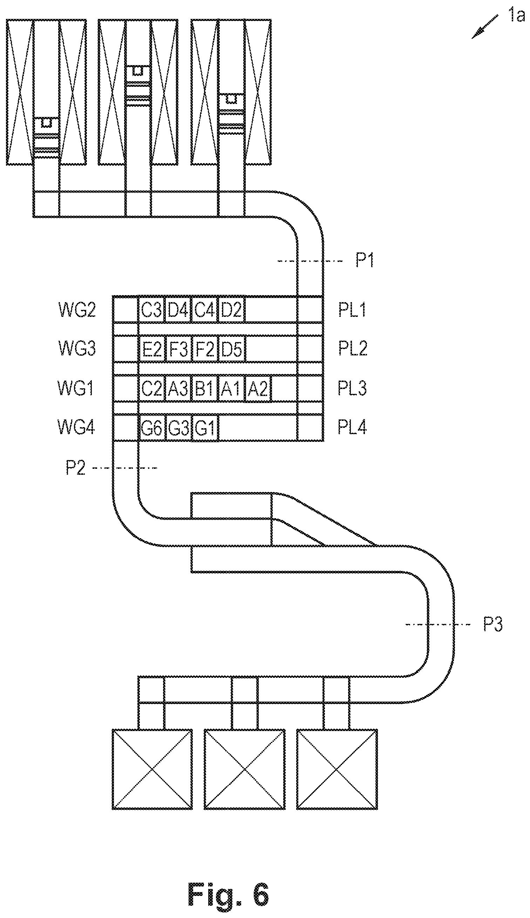

Die Fig. 6 zeigt das Kommissioniersystem 1a aus Fig. 1 dabei in einem Zustand, in welchem einige der Waren, nämlich die Waren A1, A2, A3, B1, C2, C3, C4, D2, D4, D5, E2, F2, F3, G1, G3 und G6, bereits auf die Pufferförderlinien 7 übergeben wurden und einige der Waren, nämlich die Waren C1, D1, D3, E1, F1, G2, G4 und G5, aber noch ausstehend sind. Der besseren Übersicht halber sind die einzelnen, bereits in Fig. 1 bezeichneten Bestandteile des Kommissioniersystems 1a nicht nochmal bezeichnet. Zudem sind die Pufferförderlinien 7 in der Fig. 6 und den folgenden Figuren anhand ihrer Nummerierung PL1..PL4 bezeichnet.

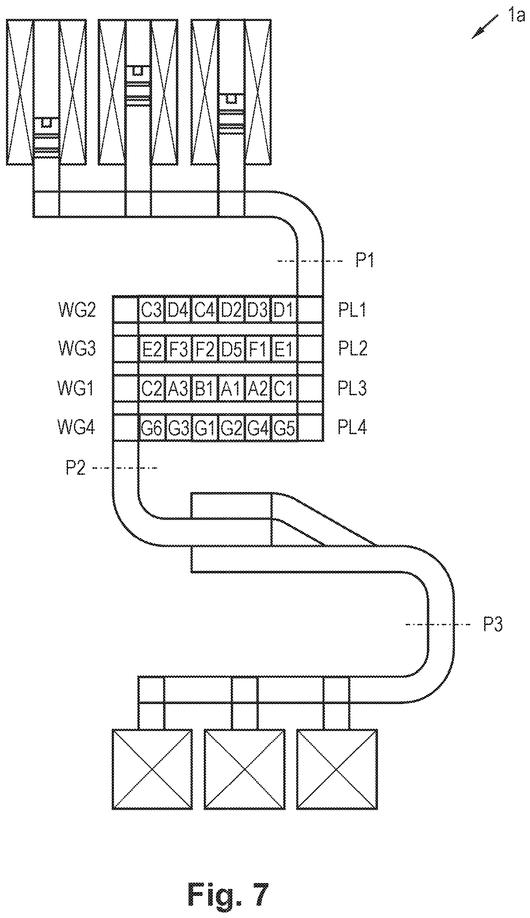

In dem in Fig. 6 dargestellten Beispiel wird die Waren-Gruppe WG1 in die Pufferförderlinie PL3 eingelagert, die Waren-Gruppe WG2 in die Pufferförderlinie PL1, die Waren-Gruppe WG3 in die Pufferförderlinie PL2 und die Waren-Gruppe WG4 in die Pufferförderlinie PL4. Eine besondere Zuordnung zwischen einer Waren-Gruppe WG1..WG4 zu einer Pufferförderlinie PL1..PL4 braucht nicht vorzuliegen. Das heißt, die Waren-Gruppe WG1..WG4 können völlig wahlfrei auf eine der freien Pufferförderlinie PL1..PL4 übergeben werden. Eine besondere Zuordnung zwischen einer Waren-Gruppe WG1..WG4 zu einer Pufferförderlinie PL1..PL4 kann in einer alternativen Ausführungsform aber vorgesehen sein. Fig. 7 zeigt das Kommissioniersystem 1a aus Fig. 1 schließlich in einem Zustand, in welchem alle Waren A1..G6 auf die Pufferförderlinien PL1..PL4 übergeben wurden.

In einem Schritt i) werden die an die Pufferförderlinien PL1..PL4 übergebenen Waren A1..G6 der Waren-Gruppen WG1..WG4 in der Gruppen-Reihenfolge von den Pufferförderlinien PL1..PL4 mittels der ausgangsseitigen Übergabevorrichtungen 9 an die zweite Fördertechnik 15 übergeben. Dazu schickt der Steuerrechner 21 entsprechende Befehle an die Übergabevorrichtungen 9. Denkbar ist, dass die Übergabevorrichtungen 9 die Befehle autonom ausführen, also die Waren A1..G6 autonom und ohne weiteres Zutun des Steuerrechners 21 von den Pufferförderlinien 7 auf die zweite Fördertechnik 15 übergeben. Denkbar wäre aber auch, dass die Warenübergabe vom Steuerrechner 21 nicht nur angestoßen, sondern auch aktiv gesteuert wird.

Die Fig. 8 zeigt die Reihenfolge der Waren A1..G6 an einem Punkt P2 auf der zweiten Fördertechnik 15. Wie aus der Fig. 8 gut erkennbar ist, passieren die Waren A1..G6 der Waren-Gruppen WG1..WG4 den Punkt P2 in der Gruppen-Reihenfolge. Innerhalb der Waren-Gruppen WG1..WG4 liegt aber keine besondere Reihenfolge der Waren A1..G6 vor, das heißt innerhalb der Waren-Gruppen WG1..WG4 liegen die Waren A1..G6 in chaotischer Reihenfolge vor. Konkret liegen die Waren A1..G6 innerhalb einer Waren-Gruppen WG1..WG4 in jener (chaotischen) Reihenfolge vor, in welcher sie aus dem Lager 2 ausgelagert wurden.

In einem Schritt j) werden die Waren A1..G6 der Waren-Gruppen WG1..WG4 in der Gruppen-Reihenfolge mittels der zweiten Fördertechnik 15 zu der zweiten Sortiervorrichtung 11 transportiert. Dazu schickt der Steuerrechner 21 einen entsprechenden Befehl an die zweite Fördertechnik 15. Denkbar ist, dass die zweite Fördertechnik 15 den Befehl autonom ausführt, also die Waren A1..G6 autonom und ohne weiteres Zutun des Steuerrechners 21 fördert. Denkbar wäre aber auch, dass die Warenförderung vom Steuerrechner 21 nicht nur angestoßen, sondern auch aktiv gesteuert wird.

In einem Schritt k) werden die Waren A1..G6 in der zweiten Sortiervorrichtung 11 gruppenweise, Waren-Gruppe WG1..WG4 für Waren-Gruppe WG1..WG4 entsprechend der Auftrags-Reihenfolge sortiert. Das heißt, in einem ersten Sortiervorgang werden die Waren A1..C2 der Waren-Gruppe WG1 sortiert, in einem zweiten Sortiervorgang die Waren C3..D4 der Waren-Gruppe WG2, in einem dritten Sortiervorgang die Waren D5..F3 der Waren-Gruppe WG3 und in einem vierten Sortiervorgang die Waren G1..G6 der Waren-Gruppe WG4.

Die Fig. 9 und 10 illustrieren den Sortiervorgang in der zweiten Sortiervorrichtung 11 am Beispiel der zweiten Waren-Gruppe WG2. In dem in Fig. 9 dargestellten Zustand wurde die Ware C3 bereits von der zentralen Zuführbahn 12 auf die Abführbahn 13 übergeben, und die Ware D4 wurde bereits von der zentralen Zuführbahn 12 auf die Abführbahn 14 übergeben. Die Ware C4 wird in der Fig. 9 gerade von der zentralen Zuführbahn 12 auf die Abführbahn 13 übergeben. Fig. 10 zeigt einen Zustand, in dem die Waren C3, C4, D1 auf die Abführbahn 13 und die Waren D2, D3, D4 auf die Abführbahn 14 übergeben wurden. In Folge werden die Waren C3, C4, D1 von der Abführbahn 13 auf die dritte Fördertechnik 19 übergeben, danach die Waren D2, D3, D4.

Für den Sortiervorgang schickt der Steuerrechner 21 einen entsprechenden Befehl an die zweite Sortiervorrichtung 11. Denkbar ist, dass die zweiten Sortiervorrichtung 11 den Befehl autonom ausführt, also die Waren C3..D4 autonom und ohne weiteres Zutun des Steuerrechners 21 sortiert. Denkbar wäre aber auch, dass der Sortiervorgang vom Steuerrechner 21 nicht nur angestoßen, sondern auch aktiv gesteuert wird.

In einem weiteren Schritt l) werden die Waren A1..G6mittels der dritten Fördertechnik 19 in der Auftrags-Reihenfolge von der zweiten Sortiervorrichtung 11 in den Kommissionierbereich 16 transportiert. Dazu schickt der Steuerrechner 21 einen entsprechenden Befehl an die dritte Fördertechnik 19. Denkbar ist, dass die dritte Fördertechnik 19 den Befehl autonom ausführt, also die Waren A1..G6 autonom und ohne weiteres Zutun des Steuerrechners 21 fördert. Denkbar wäre aber auch, dass die Warenförderung vom Steuerrechner 21 nicht nur angestoßen, sondern auch aktiv gesteuert wird.

Die Fig. 11 zeigt die Reihenfolge der Waren A1..G6 an einem Punkt P3 auf der dritten Fördertechnik 19. Wie aus der Fig. 11 gut erkennbar ist, passieren die Waren A1..G6 den Punkt P3 in der im Schritt c) angegebenen und in den Fig. 2 bis 4 dargestellten Gesamt-Warenreihenfolge. Das heißt, die Waren A1..G6 erreichen den Kommissionierbereich 16 in der im Schritt b) gewünschten Auftragsreihenfolge der Aufträge AT1..AT7 und der gewünschten Warenreihenfolge der Waren A1..G6.

Im Schritt m) werden die Waren A1..G6 im Kommissionierbereich 16 schließlich gemäß der erfassten Aufträge AT1..A7 in oder auf Zielladehilfsmittel umgeladen. Dazu schickt der Steuerrechner 21 einerseits entsprechende Befehle an die Übergabevorrichtungen 18, sodass die Waren A1..G6 an eine gewünschte Kommissionierstation 17 übergeben werden. Beispielsweise können die Waren A1..A3 des Auftrags AT1 und die Ware B1 des Auftrags AT2 an die linke der Kommissionierstationen 17 übergeben werden, die Waren C1..C4 des Auftrags AT3, die Waren D1..D5 des Auftrags AT4 und die Waren E1..E2 des Auftrags AT5 an die mittlere der Kommissionierstationen 17 und die Waren F1..F3 des Auftrags AT6 sowie die Waren G1..G6 des Auftrags AT7 an die rechte Kommissionierstation 17 der Kommissionierstationen 17. Denkbar ist, dass die Übergabevorrichtungen 18 die Befehle autonom ausführen, also die Waren A1..G6 autonom und ohne weiteres Zutun des Steuerrechners 21 selektiv von der dritten Fördertechnik 19 an die Kommissionierstationen 17 übergeben. Denkbar wäre aber auch, dass die Warenübergabe vom Steuerrechner 21 nicht nur angestoßen, sondern auch aktiv gesteuert wird.

Das Umladen der Waren A1..G6 in oder auf Zielladehilfsmittel im Schritt m) kann manuell oder automatisch mit einer Verladetechnik erfolgen. Generell können im Schritt m) pro Auftrag ein oder mehrere Zielladehilfsmittel, z.B. ein oder mehrere Versandladehilfsmittel, vorgesehen sein. Beim manuellen Umladen kann insbesondere auf einem Bildschirm angezeigt werden, welche Ware A1..G6 in welches Zielladehilfsmittel verladen werden soll. Für das Umladen schickt der Steuerrechner 21 entsprechende Befehle an die Kommissionierstation 17. Denkbar ist, dass die Kommissionierstationen 17 die Befehle autonom ausführen, das Umladen also autonom und ohne weiteres Zutun des Steuerrechners 21 erfolgt. Denkbar wäre aber auch, dass das Umladen vom Steuerrechner 21 nicht nur angestoßen, sondern auch aktiv gesteuert wird.

Die in den Schritten a) bis m) angegebenen Vorgänge beziehungsweise Abläufe können insbesondere kontinuierlich beziehungsweise wiederkehrend erfolgen.

Beispielsweise können laufend Aufträge AT1..AT7 erfasst werden (Schritt a), laufend Auftragsreihenfolgen und Warenreihenfolgen gebildet werden (Schritt b), laufend Gesamt-Warenreihenfolgen gebildet werden (Schritt c), laufend Waren-Gruppen WG1..WG4 und Gruppen-Reihenfolgen gebildet werden (Schritt d), laufend Auslager-Gruppen AG1 gebildet werden (Schritt e), laufend Waren A1..A6 ausgelagert werden (Schritt f), laufend Waren A1..A6 zur ersten Sortiervorrichtung 6a gefördert werden (Schritt g), laufend Waren A1..A6 auf die Pufferförderlinien 7 übergeben werden (Schritt h), laufend Waren A1..A6 an die zweite Fördertechnik 15 übergeben werden (Schritt i), laufend Waren A1..A6 zur zweiten Sortiervorrichtung 11 transportiert werden (Schritt j), laufend Waren A1..A6 in der zweiten Sortiervorrichtung 11 sortiert werden (Schritt k), laufend Waren A1..A6 zum Kommissionierbereich 16 transportiert werden (Schritt l) und laufend Waren A1..A6 umgeladen werden (Schritt m).

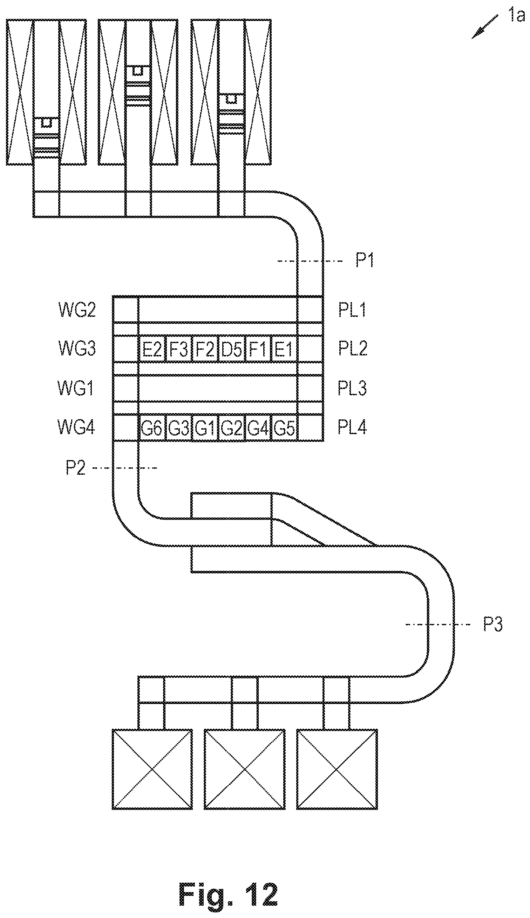

Fig. 12 zeigt in diesem Zusammenhang einen Zustand des in der Fig. 1 dargestellten Kommissioniersystems 1a, in dem die Waren A1..C2 der Waren-Gruppe WG1 und die Waren C3..D4 der Waren-Gruppe WG2 die erste Sortiervorrichtung 6a bereits verlassen haben und die Pufferförderlinien PL1 und PL3 demnach wieder frei sind.

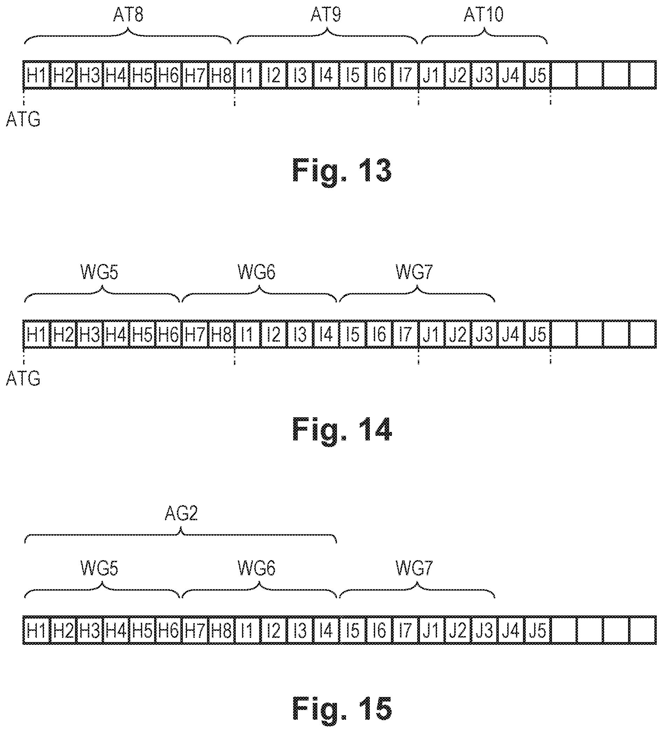

Weiterhin wird angenommen, dass zwischenzeitlich weitere Aufträge AT8..A10 erfasst wurden (Schritt a), so wie dies in der Fig. 13 illustriert ist. Der Auftrag AT8 umfasst dabei die Waren H1..H8, der Auftrag AT9 die Waren I1..I7 und der Auftrag AT10 die Waren J1..J5. In der schon dargelegten Weise werden die Schritte b) und c) für die neu eingelangten Aufträge AT8..A10 durchgeführt. Fig. 13 zeigt dazu die so erhaltene Gesamt-Warenreihenfolge. Weiterhin wird auch Schritt d) in der schon beschriebenen Weise für die neu eingelangten Aufträge AT8..A10 ausgeführt. Fig. 14 zeigt dazu die so erhaltenen Waren-Gruppen WG5..WG7. Aus der Fig. 14 ist erkennbar, dass nicht alle Waren H1..J5 von den Waren-Gruppen WG5..WG7 umfasst sind, sondern die beiden Waren J4..J5 übrigbleiben. Diese werden erst bei einem neuerlichen Bilden von Waren-Gruppen berücksichtigt. Fig. 15 zeigt das Ergebnis einer weiteren Ausführung des Schritts e) und damit konkret eine zweite Auslager-Gruppe AG2.

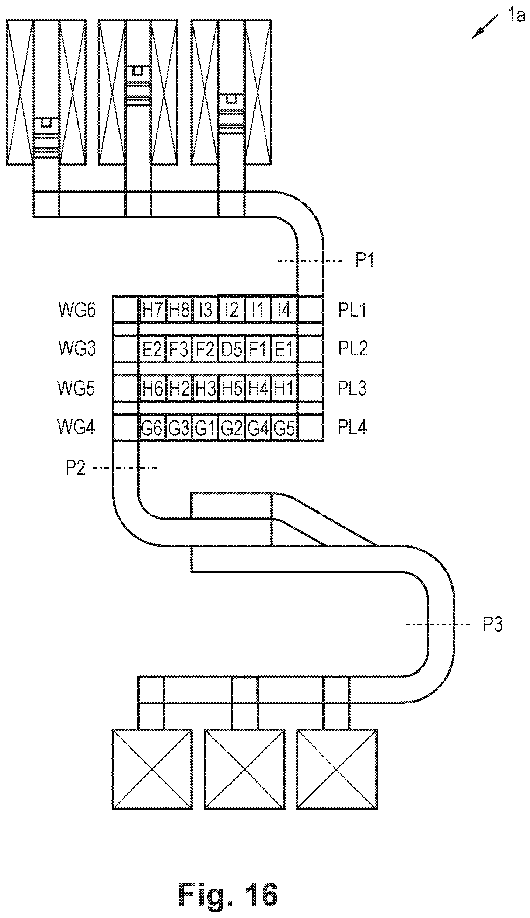

Nach einer neuerlichen Ausführung der Schritte f), g) und h) kann der in Fig. 16 dargestellte Zustand vorliegen. Konkret wurden die Waren H1..H6 der Waren-Gruppe WG5 auf die Pufferförderlinie PL3 und die Waren H7..I4 der Waren-Gruppe WG6 auf die Pufferförderlinie PL1 übergeben. Die Waren-Gruppen WG3 und WG4 sind ebenfalls nach wie vor im Bereich der ersten Sortiervorrichtung 6a, sie könnten diese zwischenzeitlich aber auch verlassen haben.

Die Schritte i) bis m) werden ebenfalls in der schon beschriebenen Weise ausgeführt.

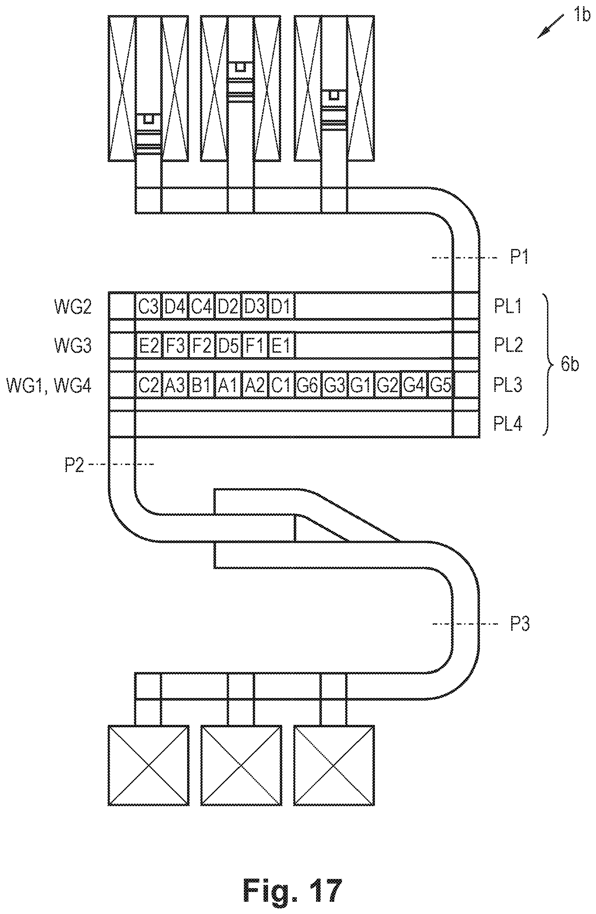

Fig. 17 zeigt nun eine weitere Ausführungsvariante eines Kommissioniersystems 1b, welches dem in Fig. 1 dargestellten Kommissioniersystems 1a sehr ähnlich ist. Im Unterschied dazu sind die Pufferförderlinien PL1..PL4 der ersten Sortiervorrichtung 6b nun aber länger ausgeführt, insbesondere doppelt so lang wie die Pufferförderlinien PL1..PL4 der ersten Sortiervorrichtung 6a. Während jede der Pufferförderlinien PL1..PL4 der ersten Sortiervorrichtung 6a Waren A1..G6 genau einer Waren-Gruppe WG1..WG4 aufnimmt, nehmen die Pufferförderlinien PL1..PL4 der ersten Sortiervorrichtung 6b Waren A1..G6 mehrerer ganzer Waren-Gruppen WG1..WG4 auf, im konkreten Beispiel jeweils Waren A1..G6 von genau zwei ganzen Waren-Gruppen WG1..WG4. In Fig. 17 sind demnach die Waren C3..D4 der Waren-Gruppe WG2 in der Pufferförderlinie PL1, die Waren D5..F3 der Waren-Gruppe WG3 in der Pufferförderlinie PL2 und die Waren A1..C2 und G1..G6 der Waren-Gruppen WG1 und WG 4 in der Pufferförderlinie PL3 aufgenommen. Denkbar wäre aber auch, dass Pufferförderlinien PL1..PL4 vorgesehen sind, die Waren A1..G6 einer anderen Anzahl ganzer Waren-Gruppen WG1..WG4 aufnimmt, beispielsweise jeweils Waren A1..G6 von drei, vier oder mehr ganzen Waren-Gruppen WG1..WG4.

Die Ausführung der Schritte a) bis d), g) und i) bis m) erfolgt analog zu dem bereits anhand der Fig. 2 bis 5 und 8 bis 11 beschriebenen Ablauf. Lediglich bei den Schritten e), f) und h) gibt es einen Unterschied.

Zwar werden im Schritt h) auch hier wieder Waren A1..G6 der Auslager-Gruppe AG1 mittels der eingangsseitigen Übergabevorrichtungen 8 selektiv von der ersten Fördertechnik 10 auf die Pufferförderlinien PL1..PL4 übergeben, wobei Waren A1..G6 einer Waren-Gruppe WG1..WG4 der Auslager-Gruppe AG1 in einen freien Pufferbereich auf den Pufferförderlinien PL1..PL4 übergeben werden und wobei die Waren A1..G6 dieser Waren-Gruppe WG1..WG4 in der zumindest einen Pufferförderlinie PL1..PL4 in beliebiger Reihenfolge einander direkt benachbart angeordnet sind. Allerdings liegen die Waren A1..C2 der Waren-Gruppe WG1 und die Waren G1..G6 der Waren-Gruppe WG4 nicht nebeneinander auf den Pufferförderlinien PL3 und PL4, so wie das in dem in der Fig. 7 dargestellten Beispiel der Fall ist, sondern hintereinander in der Pufferförderlinie PL3. Die Pufferförderlinie PL4 ist in dem in Fig. 17 dargestellten Zustand dagegen noch frei.

Die Waren-Gruppen WG1..WG4 weisen eine Ordnungsnummer entsprechend der Gruppen-Reihenfolge auf, wobei Waren A1..G6 von Waren-Gruppen WG1..WG4 mit niedrigerer Ordnungsnummer in der jeweiligen Pufferförderlinie PL1..PL4 weiter stromabwärts eingelagert werden als Waren A1..G6 von Waren-Gruppen WG1..WG4 mit höherer Ordnungsnummer. In dem in Fig. 17 dargestellten Beispiel bedeutet dies, dass die Waren A1..C2 der Waren-Gruppe WG1 weiter stromabwärts eingelagert sind als die Waren G1..G6 der Waren-Gruppe WG4.

Durch die vorgeschlagenen Maßnahmen kann ein geforderter Formfaktor für die erste Sortiervorrichtung 6b leichter erreicht werden. Zudem kann ein konstanter Förderstrom am Ausgang der ersten Sortiervorrichtung 6b auch dann aufrechterhalten werden, wenn eine Nachförderung von Waren A1..G6 in die erste Sortiervorrichtung 6b vergleichsweise viel Zeit in Anspruch nimmt.

In einer ersten Sub-Variante erfolgt das Auslagern der von der Auslager-Gruppe AG1 umfassten Waren A1..G6 im Schritt f) in chaotischer Reihenfolge, wobei Waren A1..G6 von Waren-Gruppen WG1..WG4, die im Schritt h) hintereinander an eine Pufferförderlinie PL1..PL4 übergeben werden, jedoch ohne Verletzung der Gruppen-Reihenfolge bzw. gemäß der Gruppen-Reihenfolge ausgelagert werden. Bei dieser Variante wird das Prinzip der chaotischen Auslagerung also dahingehend durchbrochen, als Waren-Gruppen WG1..WG4, die in einer Pufferförderlinie PL1..PL4 hintereinander zu liegen kommen, ohne Verletzung der Gruppen-Reihenfolge ausgelagert werden. Ansonsten kommt das chaotische Auslagerungsprinzip zum Tragen. In dem konkreten Beispiel bedeutet dies, dass die (alle) Waren A1..C2 der Waren-Gruppe WG1 vor den (allen) Waren G1..G6 der Waren-Gruppe WG4 ausgelagert werden, neben dieser Bedingung aber keine Einschränkung der chaotischen Auslagerung existiert.

In einer zweiten Sub-Variante erfolgt das Auslagern der von der Auslager-Gruppe AG1 umfassten Waren A1..G6 im Schritt f) in chaotischer Reihenfolge, wobei eine Auslager-Gruppe AG1 im Schritt e) maximal (insbesondere genau) so viele Waren-Gruppen WG1..WG4 aufweist wie Pufferförderlinien PL1..PL4 freie Kapazität für die Aufnahme von Waren A1..G6 je einer Waren-Gruppe WG1..WG4 bei einer Übergabe der Waren A1..G6 der Auslager-Gruppe AG1 in die erste Sortiervorrichtung 6b aufweisen werden. Hier wird von vornherein vermieden, dass eine Auslager-Gruppe AG1 Waren-Gruppen WG1..WG4 aufweist, die hintereinander an eine einzige Pufferförderlinie PL1..PL4 übergeben werden. Daher können die Waren A1..G6 der Auslager-Gruppe AG1 im Schritt f) in diesem Fall ohne Einschränkung chaotisch ausgelagert werden, obwohl eine Pufferförderlinie PL1..PL4 Waren A1..G6 mehrerer Waren-Gruppen WG1..WG4 aufnehmen kann.

In dem konkreten Beispiel bedeutet dies, dass die die Waren A1..C2 der Waren-Gruppe WG1 und die Waren G1..G6 der Waren-Gruppe WG4 so, wie in der Fig. 17 dargestellt, hintereinander in die in der Pufferförderlinie PL3 eingelagert werden können, wenn diese im Schritt f) hintereinander ausgelagert werden. Ist dies nicht der Fall, weil beispielsweise die Ware G6 vor der Ware C1 ausgelagert wurde, dann können die Waren G1..G6 der Waren-Gruppe WG4 abweichend von dem im Fig. 17 dargestellten Fall in die Pufferförderlinie PL4 eingelagert werden. Es liegt dann im Grunde der bereits in Fig. 7 dargestellte Zustand vor.

Ein initiales Befüllen der ersten Sortiervorrichtung 6b kann schrittweise mittels mehrerer Auslager-Gruppen AG1, AG2 erfolgen. Insbesondere können genauso viele Auslager-Gruppen AG1, AG2 vorgesehen werden, wie in einer Pufferförderlinie PL1..PL4 Waren-Gruppen WG1..WG7 aufgenommen werden können. In dem vorliegenden Beispiel bedeutet dies, dass die Waren H1..J3 der Waren-Gruppen WG5..WG7 bereits in die erste Sortiervorrichtung 6b übergeben werden können, auch wenn noch keine der Waren-Gruppen WG1..WG4 die erste Sortiervorrichtung 6b wieder verlassen haben, da ja die erste Sortiervorrichtung 6b in diesem Beispiel eine Aufnahmekapazität von acht Waren-Gruppen WG1..WG7 aufweist. Insbesondere kann die Auslagergruppe AG1 mit den Waren-Gruppen WG1..WG4 und darauffolgend wie gehabt die Auslagergruppe AG2 mit den Waren-Gruppen WG5..WG6 gebildet werden. Die Auslagergruppe AG2 könnte in diesem Fall aber auch die Waren-Gruppe WG7 sowie eine achte Waren-Gruppe umfassen.

Wird nach der ersten Sub-Variante verfahren, dann kann die erste Sortiervorrichtung 6b auch mit einer einzigen Auslagergruppe AG1 befüllt werden, welche die Waren-Gruppen WG1..WG7 sowie eine achte Waren-Gruppe aufweist.

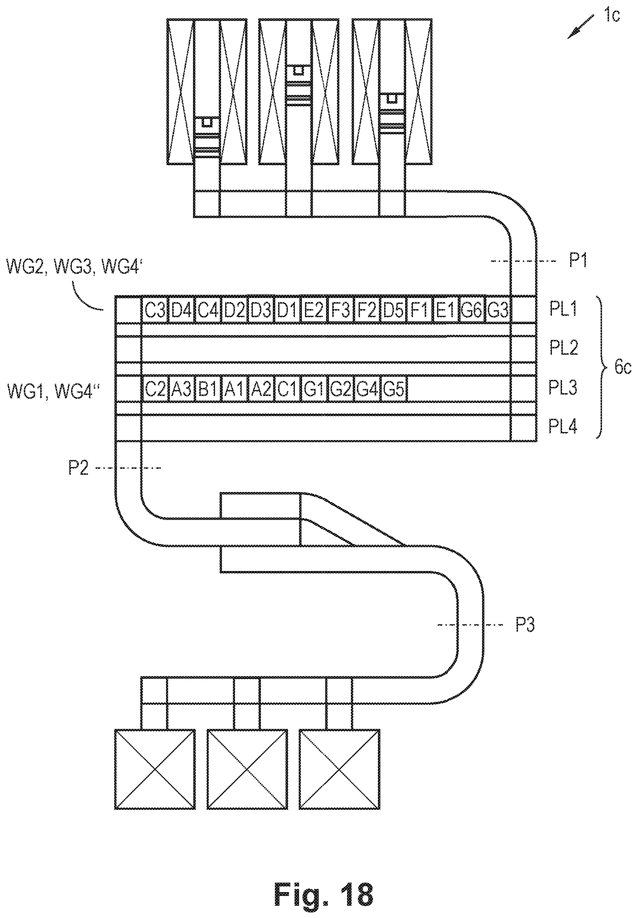

Fig. 18 zeigt nun eine weitere Ausführungsvariante eines Kommissioniersystems 1c, welches dem in Fig. 17 dargestellten Kommissioniersystems 1b sehr ähnlich ist. Im Unterschied dazu sind die Pufferförderlinien PL1..PL4 der ersten Sortiervorrichtung 6c aber noch etwas länger ausgebildet. Insbesondere kann jede der Pufferförderlinien PL1..PL4 der ersten Sortiervorrichtung 6c vierzehn Waren A1..G6 aufnehmen. Demgemäß ist ein Quotient aus einer Warenkapazität einer Pufferförderlinie PL1..PL4 der Pufferförderlinien PL1..PL4 und der Anzahl der Waren A1..G6 in einer Waren-Gruppe WG1..WG7 nicht ganzzahlig. In dem konkreten Beispiel beträgt der besagte Quotient 14/6=2,33.

Die zu dem anhand der Fig. 17 erläuterten Beispiel offenbarte technische Lehre ist sinngemäß auch auf die in Fig. 18 dargestellte Ausführungsvariante anwendbar. In dem konkreten Beispiel sind die Waren C3..D4 der Waren-Gruppe WG2 und die Waren D5..F3 der Waren-Gruppe WG3 in der Pufferförderlinie PL1 eingelagert und die Waren A1..C2 der Waren-Gruppe WG1 in der Pufferförderlinie PL3. Die Waren G1..G6 der Waren-Gruppe WG4 sind dagegen "verstreut" in freie Bereiche mehrerer der Pufferförderlinien PL1..PL4, nämlich in freie Bereiche der Pufferförderlinien PL1 und PL3 eingelagert. Konkret befinden sich die Waren G3, G6 eines ersten Waren-Gruppen-Teils WG4' in der Pufferförderlinie PL1 und die Waren G1, G2, G4, G5 eines zweiten Waren-Gruppen-Teils WG4" in der Pufferförderlinie PL3. Im Schritt i) ist daher zu beachten, dass die Warengruppe WG4 durch Ansteuerung zweier Pufferförderlinien PL1 und PL3 gebildet wird, wobei egal ist, ob zuerst die Waren G3, G6 aus der Pufferförderlinie PL1 und dann die Waren G1, G2, G4, G5 aus der Pufferförderlinie PL3 ausgelagert werden oder umgekehrt, da die Waren G1..G6 der Waren-gruppe WG4 in der zweiten Sortiervorrichtung 11 ohnehin wieder in die richtige Reihenfolge gebracht werden können.

In den bisherigen Beispielen wurde davon ausgegangen, dass im Schritt b) im Steuerrechner 21 neben einer im Kommissionierbereich 16 gewünschten Auftragsreihenfolge der Aufträge AT1..AT7 eine im Kommissionierbereich 16 gewünschte Warenreihenfolge der Waren A1..G6 innerhalb jedes Auftrags AT1..AT7 der Aufträge AT1..AT7 gebildet wird.

Das heißt, dass
im Schritt c) eine im Kommissionierbereich 16 gewünschte Gesamt-Warenreihenfolge durch Aneinanderreihen der Aufträge AT1..AT7 gebildet wird,
im Schritt k) die Gesamt-Warenreihenfolge durch gruppenweises Sortieren der Waren A1..G6, Waren-Gruppe WG1..WG4 für Waren-Gruppe WG1..WG4, in der zweiten Sortiervorrichtung 11 hergestellt wird, und
im Schritt l) die Waren A1..G6 mit der dritten Fördertechnik 19 in der Gesamt-Warenreihenfolge in den Kommissionierbereich16 transportiert werden.

Dies ist jedoch nicht zwingend nötig. Denkbar ist vielmehr, dass die Warenreihenfolge der Waren A1..G6 innerhalb jedes Auftrags AT1..AT7 nicht der im Kommissionierbereich 16 gewünschte Warenreihenfolge der Waren A1..G6 entsprechen muss, sondern die Waren A1..G6 eines Auftrags AT1..AT7 dort in beliebiger, das heißt in irgendeiner Reihenfolge ankommen können.

Während in den bisherigen Beispielen das zumindest auftragsweise Gruppieren der Waren A1..G6 entsprechend der Auftrags-Reihenfolge im Schritt h) implizit durch Herstellen der gewünschten Gesamt-Warenreihenfolge erfolgt ist und ein expliziter Schritt zum auftragsweisen Gruppieren der Waren A1..G6 entsprechend der Auftrags-Reihenfolge dazu nicht nötig war, steht im Schritt h) nun (nur) das auftragsweise Gruppieren der Waren A1..G6 entsprechend der Auftrags-Reihenfolge im Fokus.

Für das Sortieren der Waren-Gruppe WG2 (siehe auch Fig. 9 und 10) bedeutet dies nun, dass die Waren C3, C4 des Auftrags AT3 die zweite Sortiervorrichtung 11 zwar vor den Waren D1..D4 des Auftrags AT4 verlassen müssen, innerhalb der Aufträge AT3, AT4 aber eine beliebige Reihenfolge vorgesehen beziehungsweise zugelassen werden kann. Denkbar ist also beispielsweise, dass die Waren C3, C4 der Waren-Gruppe WG2 die zweite Sortiervorrichtung 11 in der Reihenfolge C4, C3, D3, D4, D1, D2 verlassen. Insbesondere kann einfach eine nach dem chaotischen Auslagern im Schritt f) vorliegende Reihenfolge (siehe auch Fig. 8) innerhalb der Aufträge AT3, AT4 beibehalten werden. Demgemäß können die Waren C3..D4 der Waren-Gruppe WG2 die zweite Sortiervorrichtung 11 insbesondere in der Reihenfolge C3, C4, D4, D2, D3, D1 verlassen. Ausgehend von dem in Fig. 8 vorliegenden Zustand muss also nur die Reihenfolge der Waren D4, C4 vertauscht werden.

Waren-Gruppen WG1..WG7, welche Waren A1..J5 jeweils nur eines Auftrags AT1..AT10 enthalten, können die zweite Sortiervorrichtung 11 im Schritt k) überhaupt ohne Sortiervorgang durchlaufen oder über einen Bypass umgehen, da eine Sortierung der Waren A1..J5 innerhalb eines Auftrags AT1..AT10 in der nun beschriebenen Ausführungsvariante nicht notwendig ist. In den vorliegenden Beispielen trifft dies auf die Waren-Gruppen WG4 und WG5 zu.

Durchlaufen Waren G1..G6 der Waren-Gruppe WG4 oder Waren H1..H6 der Waren-Gruppe WG5 die zweite Sortiervorrichtung 11 ohne Sortiervorgang, so können diese einfach nacheinander von der zentralen Zuführbahn 12 auf eine der Abführbahnen 13 und 14 abgegeben werden. Denkbar wäre auch, dass die zentrale Zuführbahn 12 direkt mit der dritten Fördertechnik 19 verbunden ist. Eine Abgabe der Waren G1..G6 und H1..H6 auf die Abführbahnen 13 und 14 kann dann entfallen.

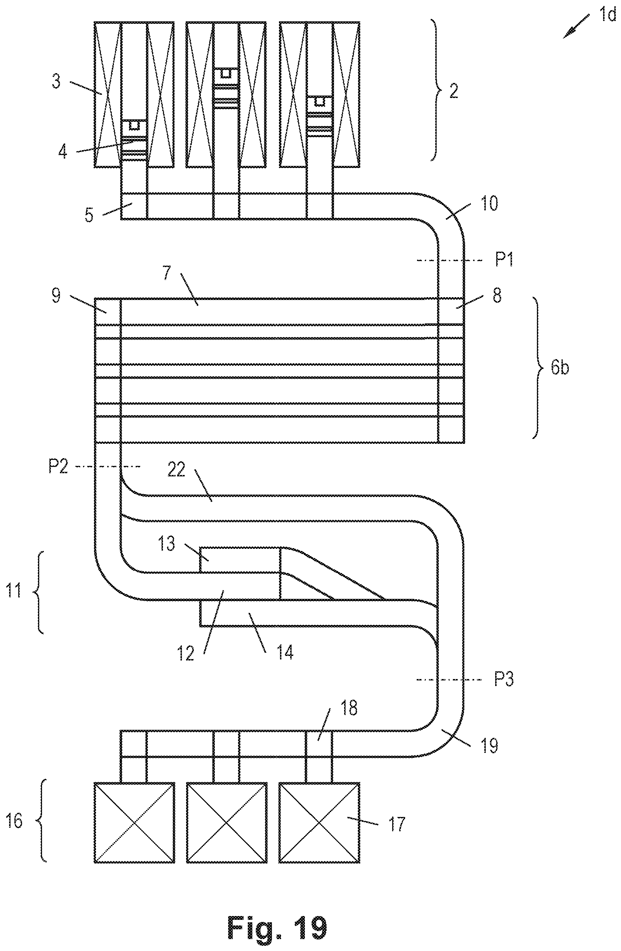

Denkbar ist auch, dass ein Bypass 22 vorgesehen ist, welcher die zweite Sortiervorrichtung 11 umgeht, so wie das in dem in Fig. 19 dargestellten Beispiel eines Kommissioniersystems 1d der Fall ist. Die Waren-Gruppen WG4 und WG5, welche Waren G1..G6 und H1..H6 jeweils nur eines Auftrags AT7 und AT8 enthalten, können die zweite Sortiervorrichtung 11 im Schritt k) über den Bypass 22 umgehen. Ein derartiger Bypass 22 kann ebenso bei dem in Fig. 1, Fig. 17 und Fig. 18 dargestellten Kommissioniersystem 1a..1c vorgesehen sein.

In den bisher offenbarten Beispielen wurde davon ausgegangen, dass die Waren A1..J5 jeweils aus einem Stück bestehen, beziehungsweise wurde den vorgestellten Abläufen je ein Stück einer Ware A1..J5 zugrunde gelegt. Dies ist aber keine zwingende Bedingung. Denkbar ist vielmehr auch, dass
eine Ware A1..J5 in der Gesamt-Warenreihenfolge ein beliebiges Stück von mehreren Waren A1..J5 derselben Warentype ist, welche in oder auf einem Ladehilfsmittel lagern,
die Schritte f) bis l) durch entsprechende Manipulation des Ladehilfsmittels erfolgen, und
der Schritt m) die Entnahme der Ware A1..J5 aus oder von dem Ladehilfsmittel umfasst.

In Bezug auf die bisher offenbarten Beispiele bedeutet dies also, dass in den vorgestellten Beispielen anstelle einer Ware A1..J5 auch ein Ladehilfsmittel mit mehreren Stücken der betreffenden Ware A1..J5 vorgesehen werden kann. Das heißt, dass zum Beispiel anstelle der Ware A1 ein Ladehilfsmittel mit mehreren dieser Waren A1 vorgesehen werden kann, und so weiter. An dem Sortierverfahren ändert dies im Grunde aber nichts, insbesondere wenn jeweils ein Stück einer Ware A1..J5 aus den betreffenden Ladehilfsmitteln entnommen wird. Werden im Schritt m) mehrere Stücke einer Ware A1..J5 benötigt, dann kann das Verfahren insofern vereinfacht werden, als eben mehrere Stücke einer Ware A1..J5 aus einem Ladehilfsmittel entnommen werden, ohne dass dazu mehrere Plätze im Sortierverfahren zu belegen sind. Werden im Schritt m) zum Beispiel drei Stück einer Ware A1 benötigt, muss die Warenreihenfolge nicht die Abfolge A1, A1, A1, A2, A3, ... enthalten, sondern kann einfach als 3xA1, 1xA2, 1xA3, ... oder vereinfacht als 3xA1, A2, A3, ... geschrieben werden. Es ist lediglich sicherzustellen, dass das betreffende Ladehilfsmittel dann zumindest drei Stück der Ware A1 beinhaltet und im Schritt m) drei Stück der Ware A1 aus oder von dem Ladhilfsmittel entnommen und in oder auf das Zielladehilfsmittel umgeladen werden.

Streng genommen kann in diesem Fall von einer "Warentypenreihenfolge" anstatt von einer "Warenreihenfolge" gesprochen werden. Dementsprechend kann der Begriff "Warenreihenfolge" in der obigen Offenbarung gedanklich durch den Begriff "Warentypenreihenfolge" ersetzt werden. Denkbar sind auch Mischformen, bei denen ein Teil der Waren A1..J5 einstückig vorliegen und ohne Ladehilfsmittel manipuliert werden und ein anderer Teil der Waren A1..J5 in Ladehilfsmitteln transportiert werden. Dementsprechend kann der Begriff "Warenreihenfolge" in der obigen Offenbarung gedanklich durch den Begriff "gemischte Waren- und Warentypenreihenfolge" ersetzt werden.

Angemerkt wird jedoch, dass die Warenreihenfolge in jedem der angesprochenen Fälle mehrere Instanzen zum Beispiel der Ware A1 aufweisen kann, wenn mehrere Stücke der Ware oder Warentype A1 in unterschiedlichen Kommissionierstationen 17 oder auch in einer Kommissionierstationen 17 zu unterschiedlichen Zeitpunkten benötigt werden, beispielsweise wenn mehrere Stücke der Ware oder Warentype A1 in einem Packmuster für eine Palette an unterschiedlichen Stellen benötigt werden beziehungsweise vorgesehen sind.

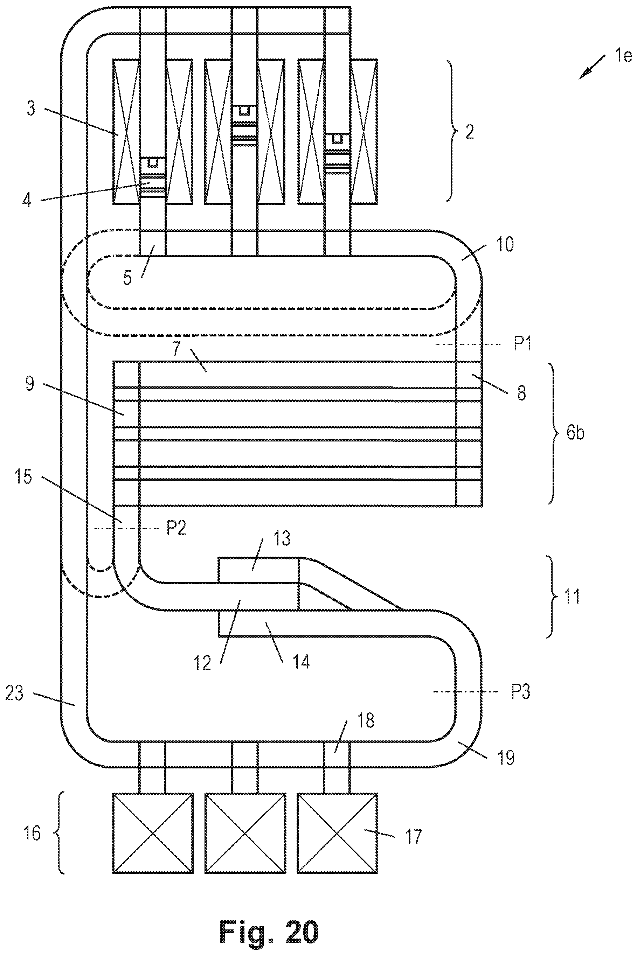

Vorteilhaft kann eine nach dem Schritt m) im oder auf dem Ladehilfsmittel verbleibende Restmenge an Waren A1..J5 in das Lager 2 rückgelagert werden. Fig. 20 zeigt dazu eine Ausführungsform eines Kommissioniersystems 1e, das dem in Fig. 17 dargestellten Kommissioniersystem 1b ähnlich ist. Im Unterschied dazu umfasst das Kommissioniersystems 1e eine Rückförderbahn 23, über welche nicht benötigte Waren A1..J5 in das Lager 2 rückgelagert werden können. Die Rückförderbahn 23 ist in dem in Fig. 20 dargestellten Beispiel an die Rückseite des Lagers 2 geführt, sodass der Auslagerprozess durch rückzulagernde Waren A1..J5 nicht gestört ist. Denkbar ist jedoch auch, dass die Rückförderbahn 23 zur Vorderseite des Lagers 2 führt, so wie das mit strichlierten Linien angedeutet ist. Eine derartige Rückförderbahn 23 kann auch bei den in Fig. 1, Fig. 17 bis Fig. 19 dargestellten Kommissioniersystemen 1a..1d vorgesehen sein.

Denkbar ist weiterhin, dass die erste Fördertechnik 10 eine Kreisförderbahn umfasst, so wie das in der Fig. 20 mit strichlierten Linien angedeutet ist. Weiterhin ist beispielsweise möglich, dass die zweite Fördertechnik 15 ebenfalls mit der Rückförderbahn 23 und/oder der Kreisförderbahn der ersten Fördertechnik 10 verbunden sein kann, so wie das in der Fig. 20 ebenfalls mit strichlierten Linien angedeutet ist. Durch die Kreisförderbahn beziehungsweise die Verbindung der zweiten Fördertechnik 15 mit der Rückförderbahn 23 können Waren A1..J5 an der ersten Sortiervorrichtung 6b oder an der zweiten Sortiervorrichtung 11 vorbei zurückgeführt werden und insbesondere auch rückgelagert werden. Dies ist zum Beispiel dann vorteilhaft, wenn es zu Störungen im Ablauf des Kommissionierverfahrens kommt oder zum Beispiel Aufträge AT1..AT10 storniert oder anders priorisiert werden. Selbstverständlich können die in Fig. 20 vorgeschlagenen Maßnahmen auch mit dem Bypass 22 der Fig. 19 kombiniert und/oder bei den in Fig. 1, Fig. 17 bis Fig. 19 dargestellten Kommissioniersystemen 1a..1d vorgesehen werden.

Dadurch, dass die Gesamt-Warenreihenfolge in Waren-Gruppen WG1..WG7 mit jeweils einer beliebigen Anzahl von Waren A1..J5 unabhängig von Auftragsgrenzen ATG segmentiert werden, kann die zweite Sortiervorrichtung 11 generell optimal, das heißt nahe oder an der maximalen Sortierkapazität betrieben werden. Wie bereits erwähnt gelingt dies dann besonders gut, wenn die Anzahl an Waren A1..J5 in einer Waren-Gruppe WG1..WG7 genau der Anzahl an Waren A1..J5 entspricht, welche in der zweiten Sortiervorrichtung 11 in einem Sortiervorgang in jede beliebige Reihenfolge gebracht werden können. Grundsätzlich können die Waren-Gruppen WG1..WG7 aber auch weniger Waren A1..J5 umfassen und grundsätzlich können die Waren-Gruppen WG1..WG7 auch unterschiedlich groß sein. Weiterhin wird darauf hingewiesen, dass die Pufferförderlinien PL1..PL4 in den dargestellten Beispielen zwar jeweils gleich lang sind und gleich viele Waren A1..J5 aufnehmen können, dies aber keine zwingende Bedingung für das vorgestellte Verfahren ist. Vielmehr können die Pufferförderlinien PL1..PL4 auch unterschiedlich lange sein, beispielsweise wenn bauliche Gegebenheiten dies erfordern. Wie erwähnt kann ein oder mehrere Schritte f) bis m) vom Steuerrechner 21 angestoßen werden oder aber auch gesteuert werden. Das Steuern eines oder mehrerer der Schritte f) bis m) kann auch von einer lokalen Sub-Steuerung übernommen werden.

Von Vorteil ist es, wenn die Waren A1..J5 einer Waren-Gruppe WG1..WG7 der Auslager-Gruppe AG1, AG2 jeweils in einen freien Bereich genau einer der Pufferförderlinien PL1..PL4 eingelagert werden, insbesondere wenn die Waren A1..J5 aller Waren-Gruppen WG1..WG7 jeweils in einen freien Bereich genau einer der Pufferförderlinien PL1..PL4 eingelagert werden, so wie das in den mit Ausnahme der Fig. 18 dargestellten Beispielen der Fall ist.

Generell erfolgt die Sortierung in den in den Fig. 1 bis 20 dargestellten Beispielen in zwei Stufen, weitere Sortierstufen wären aber möglich.

Streng genommen kann eine Vorsortierung in der ersten Sortierstufe 6a..6c nur dann erfolgen, wenn eine Auslagergruppe AG1, AG2 mehr als eine Waren-Gruppe WG1..WG7 umfasst. Insbesondere ist es daher von Vorteil, wenn eine Auslagergruppe AG1, AG2 mehr als eine Waren-Gruppe WG1..WG7 umfasst.

In den Beispielen wurde stillschweigend davon ausgegangen, dass die Waren A1..J5 auf der ersten Fördertechnik 10, auf der zweiten Fördertechnik 15 und auf der dritten Fördertechnik 19 kontinuierlich gefördert werden. Denkbar ist aber auch, dass die Waren A1..J5 auf der ersten Fördertechnik 10, auf der zweiten Fördertechnik 15 und/oder auf der dritten Fördertechnik 19 diskontinuierlich gefördert und dort daher auch gestaut werden können. Die erste Fördertechnik 10, die zweite Fördertechnik 15 und/oder die dritte Fördertechnik 19 kann daher zeit- oder abschnittsweise als Puffer wirken.

Abschließend wird festgehalten, dass der Schutzbereich durch die Patentansprüche bestimmt ist.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1e: Kommissioniersystem
- 2: Lager
- 3: Lagerregal
- 4: Auslagerfördertechnik
- 5: ausgangseitige Übergabevorrichtung Lager

- 6a..6d: erste Sortiervorrichtung
- 7: Pufferförderlinie
- 8: eingangsseitige Übergabevorrichtung erste Sortiervorrichtung
- 9: ausgangseitige Übergabevorrichtung erste Sortiervorrichtung
- 10: erste Fördertechnik

- 11: zweite Sortiervorrichtung
- 12: zentrale Zuführbahn
- 13: Abführbahn
- 14: Abführbahn
- 15: zweite Fördertechnik

- 16: Kommissionierbereich
- 17: Kommissionierstation
- 18: eingangsseitige Übergabevorrichtung Kommissionierstation
- 19: dritte Fördertechnik
- 20: Steuersystem

- 21: Steuerrechner
- 22: Bypass
- 23: Rückförderbahn
- A1..J5: Ware
- AG1, AG2: Auslager-Gruppe
- AT1..AT10: Auftrag
- ATG: Auftragsgrenze
- P1..P3: Punkt
- PL1..PL4: Nummer Pufferförderlinie
- WG1..WG7: Waren-Gruppe
- WG4', WG4": Waren-Gruppen-Teil

## Patentansprüche

1. Mehrstufiges Verfahren zum automatischen Sequenzieren von Waren (A1..J5) in einem Kommissioniersystem (1a..1e) mit
einem Lager (2), in welchem Waren (A1..J5) gelagert sind und welches eine Auslagerfördertechnik (4) umfasst,
einer ersten Sortiervorrichtung (6a..6c), welche mehrere fördertechnisch parallele Pufferförderlinien (7, PL1..PL4) und je Pufferförderlinie (7, PL1..PL4) zugeordnet eine eingangsseitige Übergabevorrichtung (8) und je Pufferförderlinie (7, PL1..PL4) zugeordnet eine ausgangseitige Übergabevorrichtung (9) aufweist,
einer ersten Fördertechnik (10), welche das Lager (2) und die erste Sortiervorrichtung (6a..6c) verbindet,
einer zweiten Sortiervorrichtung (11), welche der ersten Sortiervorrichtung (6a..6c) nachgeschaltet ist,
einer zweiten Fördertechnik (15), welche die erste Sortiervorrichtung (6a..6c) und die zweite Sortiervorrichtung (11) verbindet,
einem Kommissionierbereich (16), welcher der zweiten Sortiervorrichtung (11) nachgeschaltet ist,
einer dritten Fördertechnik (19), welche die zweite Sortiervorrichtung (11) und den Kommissionierbereich (16) verbindet, und
einem Steuersystem (20), welches einen Steuerrechner (21) umfasst und welches mit der ersten Sortiervorrichtung (6a..6c) und zweiten Sortiervorrichtung (11) verbunden ist, umfassend die Schritte
a) Erfassen von mehreren Aufträgen (AT1..AT10), die jeweils zumindest eine Ware (A1..J5) umfassen, im Steuerrechner (21),
b) Bilden einer im Kommissionierbereich (16) gewünschten Auftragsreihenfolge der Aufträge (AT1..AT10) und einer Warenreihenfolge der Waren (A1..J5) innerhalb jedes Auftrags (AT1..AT10) der Aufträge (AT1..AT10) im Steuerrechner (21),
c) Bilden einer Gesamt-Warenreihenfolge durch Aneinanderreihen der Aufträge (AT1..AT10) gemäß der gewünschten Auftragsreihenfolge im Steuerrechner (21),
d) Segmentieren der Gesamt-Warenreihenfolge in Waren-Gruppen (WG1..WG7) mit jeweils einer vorgebbaren Anzahl von Waren (A1..J5) unabhängig von Auftragsgrenzen (ATG) und Bilden einer Gruppen-Reihenfolge der Waren-Gruppen (WG1..WG7) entsprechend der Gesamt-Warenreihenfolge im Steuerrechner (21), wobei die Anzahl der Waren (A1..J5) in einer Waren-Gruppe (WG1..WG7) maximal der Anzahl der Waren (A1..J5) entspricht, welche in der zweiten Sortiervorrichtung (11) in eine beliebige Reihenfolge gebracht werden können,
e) Bilden einer Auslager-Gruppe (AG1, AG2), welche aufsteigend sortierte Waren-Gruppen (WG1..WG7) der Gruppen-Reihenfolge umfasst, für deren Waren (A1..J5) bei einer Übergabe in die erste Sortiervorrichtung (6a..6c) freie Kapazität in der ersten Sortiervorrichtung (6a..6c) verfügbar sein wird, im Steuerrechner (21),
f) Auslagern der von der Auslager-Gruppe (AG1, AG2) umfassten Waren (A1..J5) aus dem Lager (2) mittels der Auslagerfördertechnik (4),
g) Transportieren der von der Auslager-Gruppe (AG1, AG2) umfassten Waren (A1..J5) zur ersten Sortiervorrichtung (6a..6c) mittels der ersten Fördertechnik (10),
h) selektive Übergabe der Waren (A1..J5) der Auslager-Gruppe (AG1, AG2) von der ersten Fördertechnik (10) auf die Pufferförderlinien (7, PL1..PL4) mittels der eingangsseitigen Übergabevorrichtungen (8), wobei Waren (A1..J5) einer Waren-Gruppe (WG1..WG7) der Auslager-Gruppe (AG1, AG2) in einen freien Pufferbereich auf zumindest eine der Pufferförderlinien (7, PL1..PL4) übergeben werden und wobei die Waren (A1..J5) der Waren-Gruppe (WG1..WG7) in der zumindest einen Pufferförderlinie (7, PL1..PL4) in beliebiger Reihenfolge einander direkt benachbart angeordnet sind,
i) Übergabe der an die Pufferförderlinien (7, PL1..PL4) übergebenen Waren (A1..J5) der Waren-Gruppen (WG1..WG7) in der Gruppen-Reihenfolge von den Pufferförderlinien (7, PL1..PL4) an die zweite Fördertechnik (15) mittels der ausgangsseitigen Übergabevorrichtungen (9),
j) Transportieren der Waren (A1..J5) der Waren-Gruppen (WG1..WG7) in der Gruppen-Reihenfolge zu der zweiten Sortiervorrichtung (11) mittels der zweiten Fördertechnik (15),
k) gruppenweises Sortieren der Waren (A1..J5), Waren-Gruppe (WG1..WG7) für Waren-Gruppe (WG1..WG7), entsprechend der Auftrags-Reihenfolge in der zweiten Sortiervorrichtung (11),
l) Transportieren der Waren (A1..J5) in der Auftrags-Reihenfolge von der zweiten Sortiervorrichtung (11) in den Kommissionierbereich (16) mittels der dritten Fördertechnik (19), und
m) Umladen der Waren (A1..J5) in oder auf Zielladehilfsmittel gemäß der erfassten Aufträge (AT1..AT10) im Kommissionierbereich (16).

2. Verfahren nach Anspruch 1, **dadurch gekennzeichnet, dass** Waren-Gruppen (WG1..WG7), welche Waren (A1..J5) jeweils nur eines Auftrags (AT1..AT10) enthalten, die zweite Sortiervorrichtung (11) im Schritt k) ohne Sortiervorgang durchlaufen oder über einen Bypass (22) umgehen.

3. Verfahren nach Anspruch 1, **dadurch gekennzeichnet, dass**
im Schritt b) zusätzlich eine im Kommissionierbereich (16) gewünschte Warenreihenfolge der Waren (A1..J5) innerhalb jedes Auftrags (AT1..AT10) der Aufträge (AT1..AT10) im Steuerrechner (21) gebildet wird,
im Schritt c) eine im Kommissionierbereich (16) gewünschte Gesamt-Warenreihenfolge durch Aneinanderreihen der Aufträge (AT1..AT10) gebildet wird,
im Schritt k) die Gesamt-Warenreihenfolge durch gruppenweises Sortieren der Waren (A1..J5), Waren-Gruppe (WG1..WG7) für Waren-Gruppe (WG1..WG7), in der zweiten Sortiervorrichtung (11) hergestellt wird, und
im Schritt l) die Waren (A1..J5) mit der dritten Fördertechnik (19) in der Gesamt-Warenreihenfolge in den Kommissionierbereich (16) transportiert werden.

4. Verfahren nach einem der Ansprüche 1 bis 3, **dadurch gekennzeichnet, dass** jede Waren-Gruppe (WG1..WG7) dieselbe Anzahl an Waren (A1..J5) aufweist.

5. Verfahren nach Anspruch 4, **dadurch gekennzeichnet, dass** die Anzahl an Waren (A1..J5) in einer Waren-Gruppe (WG1..WG7) genau der Anzahl an Waren (A1..J5) entspricht, welche in der zweiten Sortiervorrichtung (11) in eine beliebige Reihenfolge gebracht werden können.

6. Verfahren nach einem der Ansprüche 1 bis 5, **dadurch gekennzeichnet, dass** die Waren (A1..J5) einer Waren-Gruppe (WG1..WG7) der Auslager-Gruppe (AG1, AG2) in einen freien Bereich genau einer der Pufferförderlinien (7, PL1..PL4) eingelagert werden.

7. Verfahren nach Anspruch 6, **dadurch gekennzeichnet, dass** jede der Pufferförderlinien (7, PL1..PL4) Waren (A1..J5) genau einer Waren-Gruppe (WG1..WG7) aufnimmt.

8. Verfahren nach Anspruch 7, **dadurch gekennzeichnet, dass** das Auslagern der von der Auslager-Gruppe (AG1, AG2) umfassten Waren (A1..J5) im Schritt f) in chaotischer Reihenfolge erfolgt.

9. Verfahren nach Anspruch 6, **dadurch gekennzeichnet, dass** jede der Pufferförderlinien (7, PL1..PL4) Waren (A1..J5) mehrerer ganzer Waren-Gruppen (WG1..WG7) aufnimmt, wobei die Waren-Gruppen (WG1..WG7) eine Ordnungsnummer entsprechend der Gruppen-Reihenfolge aufweisen und wobei Waren (A1..J5) von Waren-Gruppen (WG1..WG7) mit niedrigerer Ordnungsnummer in der jeweiligen Pufferlinie weiter stromabwärts eingelagert werden als Waren (A1..J5) von Waren-Gruppen (WG1..WG7) mit höherer Ordnungsnummer.

10. Verfahren nach einem der Ansprüche 1 bis 5, **dadurch gekennzeichnet, dass** die Waren (A1..J5) einiger der Waren-Gruppen (WG1..WG7) der Auslager-Gruppe (AG1, AG2) in freie Bereiche mehrerer der Pufferförderlinien (7, PL1..PL4) eingelagert werden.

11. Verfahren nach Anspruch 10, **dadurch gekennzeichnet, dass** ein Quotient aus einer Warenkapazität einer Pufferförderlinie (7, PL1..PL4) der Pufferförderlinien (7, PL1..PL4) und der Anzahl der Waren (A1..J5) in einer Waren-Gruppe (WG1..WG7) nicht ganzzahlig ist, wobei die Waren-Gruppen (WG1..WG7) eine Ordnungsnummer entsprechend der Gruppen-Reihenfolge aufweisen und wobei Waren (A1..J5) von Waren-Gruppen (WG1..WG7) mit niedrigerer Ordnungsnummer in der jeweiligen Pufferlinie weiter stromabwärts eingelagert werden als Waren (A1..J5) von Waren-Gruppen (WG1..WG7) mit höherer Ordnungsnummer.

12. Verfahren nach einem der Ansprüche 9 bis 11, **dadurch gekennzeichnet, dass** das Auslagern der von der Auslager-Gruppe (AG1, AG2) umfassten Waren (A1..J5) im Schritt f) in chaotischer Reihenfolge erfolgt, wobei Waren (A1..J5) jener Waren-Gruppen (WG1..WG7), die im Schritt h) hintereinander an eine der Pufferförderlinien (7, PL1..PL4) übergeben werden, gemäß der Gruppen-Reihenfolge ausgelagert werden.

13. Verfahren nach einem der Ansprüche 9 bis 11, **dadurch gekennzeichnet, dass** das Auslagern der von der Auslager-Gruppe (AG1, AG2) umfassten Waren (A1..J5) im Schritt f) in chaotischer Reihenfolge erfolgt, wobei eine Auslager-Gruppe (AG1, AG2) im Schritt e) maximal so viele Waren-Gruppen (WG1..WG7) aufweist wie Pufferförderlinien (7, PL1..PL4) freie Kapazität für die Aufnahme von Waren (A1..J5) je einer Waren-Gruppe (WG1..WG7) bei einer Übergabe der Waren (A1..J5) der Auslager-Gruppe (AG1, AG2) in die erste Sortiervorrichtung (6a..6c) aufweisen werden.

14. Verfahren nach einem der Ansprüche 1 bis 13, **dadurch gekennzeichnet, dass** die Schritte f) bis m) vom Steuerrechner (21) angestoßen werden.

15. Verfahren nach einem der Ansprüche 1 bis 14, **dadurch gekennzeichnet, dass** einer oder mehrere der Schritte f) bis m) vom Steuerrechner (21) gesteuert werden.

16. Verfahren nach einem der Ansprüche 1 bis 15, **dadurch gekennzeichnet, dass**
eine Ware (A1..J5) in der Gesamt-Warenreihenfolge ein beliebiges Stück von mehreren Waren (A1..J5) derselben Warentype ist, welche in oder auf einem Ladehilfsmittel lagern,
die Schritte f) bis l) durch entsprechende Manipulation des Ladehilfsmittels erfolgen, und
der Schritt m) die Entnahme der Ware (A1..J5) aus oder von dem Ladehilfsmittel umfasst.

17. Verfahren nach Anspruch 16, **dadurch gekennzeichnet, dass** eine nach dem Schritt m) im oder auf dem Ladehilfsmittel verbleibende Restmenge an Waren (A1..J5) in das Lager (2) rückgelagert wird.

18. Kommissioniersystem (1a..1e) mit
einem Lager (2), in welchem Waren (A1..J5) gelagert sind und welches eine Auslagerfördertechnik (4) umfasst,
einer ersten Sortiervorrichtung (6a..6c), welche mehrere fördertechnisch parallele Pufferförderlinien (7, PL1..PL4) und je Pufferförderlinie (7, PL1..PL4) zugeordnet eine eingangsseitige Übergabevorrichtung (8) und je Pufferförderlinie (7, PL1..PL4) zugeordnet eine ausgangseitige Übergabevorrichtung (9) aufweist,
einer ersten Fördertechnik (10), welche das Lager (2) und die erste Sortiervorrichtung (6a..6c) verbindet,
einer zweiten Sortiervorrichtung (11), welche der ersten Sortiervorrichtung (6a..6c) nachgeschaltet ist,
einer zweiten Fördertechnik (15), welche die erste Sortiervorrichtung (6a..6c) und die zweite Sortiervorrichtung (11) verbindet,
einem Kommissionierbereich (16), welcher der zweiten Sortiervorrichtung (11) nachgeschaltet ist,
einer dritten Fördertechnik (19), welche die zweite Sortiervorrichtung (11) und den Kommissionierbereich (16) verbindet, und
einem Steuersystem (20), welches einen Steuerrechner (21) umfasst und welches mit der ersten Sortiervorrichtung (6a..6c) und zweiten Sortiervorrichtung (11) verbunden ist, wobei der Steuerrechner (21) dazu ausgebildet ist,
a) mehrere Aufträge (AT1..AT10), die jeweils zumindest eine Ware (A1..J5) umfassen, zu erfassen,
b) eine im Kommissionierbereich (16) gewünschte Auftragsreihenfolge der Aufträge (AT1..AT10) und eine Warenreihenfolge der Waren (A1..J5) innerhalb jedes Auftrags (AT1..AT10) der Aufträge (AT1..AT10) zu bilden,
c) eine Gesamt-Warenreihenfolge durch Aneinanderreihen der Aufträge (AT1..AT10) gemäß der gewünschten Auftragsreihenfolge zu bilden,
d) die Gesamt-Warenreihenfolge in Waren-Gruppen (WG1..WG7) mit jeweils einer vorgebbaren Anzahl von Waren (A1..J5) unabhängig von Auftragsgrenzen (ATG) zu segmentieren und eine Gruppen-Reihenfolge der Waren-Gruppen (WG1..WG7) entsprechend der Gesamt-Warenreihenfolge zu bilden, wobei die Anzahl der Waren (A1..J5) in einer Waren-Gruppe (WG1..WG7) maximal der Anzahl der Waren (A1..J5) entspricht, welche in der zweiten Sortiervorrichtung (11) in eine beliebige Reihenfolge gebracht werden können,
e) eine Auslager-Gruppe (AG1, AG2) zu bilden, welche aufsteigend sortierte Waren-Gruppen (WG1..WG7) der Gruppen-Reihenfolge umfasst, für deren Waren (A1..J5) bei einer Übergabe in die erste Sortiervorrichtung (6a..6c) freie Kapazität in der ersten Sortiervorrichtung (6a..6c) verfügbar sein wird,
f) ein Auslagern der von der Auslager-Gruppe (AG1, AG2) umfassten Waren (A1..J5) aus dem Lager (2) mittels der Auslagerfördertechnik (4) auszulösen,
g) ein Transportieren der von der Auslager-Gruppe (AG1, AG2) umfassten Waren (A1..J5) zur ersten Sortiervorrichtung (6a..6c) mittels der ersten Fördertechnik (10) auszulösen,
h) eine selektive Übergabe der Waren (A1..J5) der Auslager-Gruppe (AG1, AG2) von der ersten Fördertechnik (10) auf die Pufferförderlinien (7, PL1..PL4) mittels der eingangsseitigen Übergabevorrichtungen (8) auszulösen, wobei Waren (A1..J5) einer Waren-Gruppe (WG1..WG7) der Auslager-Gruppe (AG1, AG2) in einen freien Pufferbereich auf zumindest eine der Pufferförderlinien (7, PL1..PL4) übergeben werden und wobei die Waren (A1..J5) der Waren-Gruppe (WG1..WG7) in der zumindest einen Pufferförderlinie (7, PL1..PL4) in beliebiger Reihenfolge einander direkt benachbart angeordnet sind,
i) eine Übergabe der an die Pufferförderlinien (7, PL1..PL4) übergebenen Waren (A1..J5) der Waren-Gruppen (WG1..WG7) in der Gruppen-Reihenfolge von den Pufferförderlinien (7, PL1..PL4) an die zweite Fördertechnik (15) mittels der ausgangsseitigen Übergabevorrichtungen (9) auszulösen,
j) ein Transportieren der Waren (A1..J5) der Waren-Gruppen (WG1..WG7) in der Gruppen-Reihenfolge zu der zweiten Sortiervorrichtung (11) mittels der zweiten Fördertechnik (15) auszulösen,
k) ein gruppenweises Sortieren der Waren (A1..J5), Waren-Gruppe (WG1..WG7) für Waren-Gruppe (WG1..WG7), entsprechend der Auftrags-Reihenfolge in der zweiten Sortiervorrichtung (11) auszulösen,
l) ein Transportieren der Waren (A1..J5) in der Auftrags-Reihenfolge von der zweiten Sortiervorrichtung (11) in den Kommissionierbereich (16) mittels der dritten Fördertechnik (19) auszulösen, und
m) ein Umladen der Waren (A1..J5) in oder auf Zielladehilfsmittel gemäß der erfassten Aufträge (AT1..AT10) im Kommissionierbereich (16) auszulösen.

## Claims

1. A multi-stage method for automatically sequencing articles (A1..J5) in a picking system (1a..1e) with
a storage area (2), in which articles (A1..J5) are stored and which comprises a retrieval conveying system (4),
a first sorting device (6a..6c), which has multiple buffer conveyor lines (7, PL1..PL4) which are parallel in terms of conveyance and an input-side handover device (8) assigned per buffer conveyor line (7, PL1..PL4) and an output-side handover device (9) assigned per buffer conveyor line (7, PL1..PL4),
a first conveying system (10), which connects the storage area (2) and the first sorting device (6a..6c),
a second sorting device (11), which is arranged downstream of the first sorting device (6a..6c),
a second conveying system (15), which connects the first sorting device (6a..6c) and the second sorting device (11),
a picking area (16), which is arranged downstream of the second sorting device (11),
a third conveying system (19), which connects the second sorting device (11) and the picking area (16), and
a control system (20), which comprises a control computer (21) and which is connected to the first sorting device (6a..6c) and second sorting device (11),
comprising the steps
a) acquiring multiple orders (AT1..AT10), each of which comprises at least one article (A1..J5), in the control computer (21),
b) forming an order sequence of the orders (AT1..AT10) desired in the picking area (16) and an article sequence of the articles (A1..J5) within each order (AT1..AT10) of the orders (AT1..AT10) in the control computer (21),
c) forming an overall article sequence by lining up the orders (AT1..AT10) in accordance with the desired order sequence in the control computer (21),
d) segmenting the overall article sequence into article groups (WG1..WG7) each with a specifiable number of articles (A1..J5) independent of order boundaries (ATG) and forming a group sequence of the article groups (WG1..WG7) according to the overall article sequence in the control computer (21), wherein the number of the articles (A1..J5) in an article group (WG1..WG7) corresponds to maximally the number of the articles (A1..J5) which can be brought into any sequence in the second sorting device (11),
e) forming a retrieval group (AG1, AG2), which comprises article groups (WG1..WG7) of the group sequence sorted in ascending order for whose articles (A1..J5) free capacity will be available in the first sorting device (6a..6c) upon a handover into the first sorting device (6a..6c), in the control computer (21),
f) retrieving the articles (A1..J5) comprised by the retrieval group (AG1, AG2) from the storage area (2) using the retrieval conveying system (4),
g) transporting the articles (A1..J5) comprised by the retrieval group (AG1, AG2) to the first sorting device (6a..6c) using the first conveying system (10),
h) selectively handing over the articles (A1..J5) of the retrieval group (AG1, AG2) from the first conveying system (10) onto the buffer conveyor lines (7, PL1..PL4) using the input-side handover devices (8), wherein articles (A1..J5) of an article group (WG1..WG7) of the retrieval group (AG1, AG2) are handed over into a vacant buffer area onto at least one of the buffer conveyor lines (7, PL1..PL4) and wherein the articles (A1..J5) of the article group (WG1..WG7) in the at least one buffer conveyor line (7, PL1..PL4) are arranged directly adjacent to one another in any sequence,
i) handing over the articles (A1..J5) of the article groups (WG1..WG7) handed over to the buffer conveyor lines (7, PL1..PL4) from the buffer conveyor lines (7, PL1..PL4) to the second conveying system (15) in the group sequence using the output-side handover devices (9),
j) transporting the articles (A1..J5) of the article groups (WG1..WG7) to the second sorting device (11) in the group sequence using the second conveying system (15),
k) sorting the articles groupwise (A1..J5), article group (WG1..WG7) by article group (WG1..WG7), according to the order sequence in the second sorting device (11),
l) transporting the articles (A1..J5) from the second sorting device (11) into the picking area (16) in the order sequence using the third conveying system (19), and
m) reloading the articles (A1..J5) into or onto target loading aids in accordance with the acquired orders (AT1..AT10) in the picking area (16).

2. The method according to claim 1, **characterized in that** article groups (WG1..WG7) which contain articles (A1..J5) of respectively only one order (AT1..AT10) pass through the second sorting device (11) in step k) without a sorting operation or avoid it using a bypass (22).

3. The method according to claim 1, **characterized in that**
an article sequence of the articles (A1..J5) desired in the picking area (16) is additionally formed within each order (AT1..AT10) of the orders (AT1..AT10) in the control computer (21) in step b),
an overall article sequence desired in the picking area (16) is formed by lining up the orders (AT1..AT10) in step c),
the overall article sequence is created by sorting the articles (A1..J5) groupwise, article group (WG1..WG7) by article group (WG1..WG7), in the second sorting device (11) in step k), and
the articles (A1..J5) are transported into the picking area (16) in the overall article sequence with the third conveying system (19) in step l).

4. The method according to any one of the claims 1 to 3, **characterized in that** each article group (WG1..WG7) has the same number of articles (A1..J5).

5. The method according to claim 4, **characterized in that** the number of articles (A1..J5) in an article group (WG1..WG7) corresponds to precisely the number of articles (A1..J5) which can be brought into any sequence in the second sorting device (11).

6. The method according to any one of the claims 1 to 5, **characterized in that** the articles (A1..J5) of an article group (WG1..WG7) of the retrieval group (AG1, AG2) are stored in a vacant region of precisely one of the buffer conveyor lines (7, PL1..PL4).

7. The method according to claim 6, **characterized in that** each of the buffer conveyor lines (7, PL1..PL4) receives articles (A1..J5) of precisely one article group (WG1..WG7).

8. The method according to claim 7, **characterized in that** the retrieval of the articles (A1..J5) comprised by the retrieval group (AG1, AG2) in step f) is executed in chaotic sequence.

9. The method according to claim 6, **characterized in that** each of the buffer conveyor lines (7, PL1..PL4) receives articles (A1..J5) of multiple whole article groups (WG1..WG7), wherein the article groups (WG1..WG7) have an ordinal number corresponding to the group sequence and wherein articles (A1..J5) of article groups (WG1..WG7) with a lower ordinal number are stored further downstream in the respective buffer line than articles (A1..J5) of article groups (WG1..WG7) with a higher ordinal number.

10. The method according to any one of the claims 1 to 5, **characterized in that** the articles (A1..J5) of some of the article groups (WG1..WG7) of the retrieval group (AG1, AG2) are stored in vacant regions of multiple of the buffer conveyor lines (7, PL1..PL4).

11. The method according to claim 10, **characterized in that** a quotient of an article capacity of a buffer conveyor line (7, PL1..PL4) of the buffer conveyor lines (7, PL1..PL4) and the number of the articles (A1..J5) in an article group (WG1..WG7) is not integral, wherein the article groups (WG1..WG7) have an ordinal number corresponding to the group sequence and wherein articles (A1..J5) of article groups (WG1..WG7) with a lower ordinal number are stored further downstream in the respective buffer line than articles (A1..J5) of article groups (WG1..WG7) with a higher ordinal number.

12. The method according to any one of the claims 9 to 11, **characterized in that** the retrieval of the articles (A1..J5) comprised by the retrieval group (AG1, AG2) in step f) is executed in chaotic sequence, wherein articles (A1..J5) of those article groups (WG1..WG7) which are handed over to one of the buffer conveyor lines (7, PL1..PL4) in succession in step h) are retrieved in accordance with the group sequence.

13. The method according to any one of the claims 9 to 11, **characterized in that** the retrieval of the articles (A1..J5) comprised by the retrieval group (AG1, AG2) in step f) is executed in chaotic sequence, wherein a retrieval group (AG1, AG2) in step e) has maximally as many article groups (WG1..WG7) as buffer conveyor lines (7, PL1..PL4) will have free capacity for receiving articles (A1..J5) of one article group (WG1..WG7) each upon a handover of the articles (A1..J5) of the retrieval group (AG1, AG2) into the first sorting device (6a..6c).

14. The method according to any one of the claims 1 to 13, **characterized in that** steps f) to m) are initiated by the control computer (21).

15. The method according to any one of the claims 1 to 14, **characterized in that** one or multiple of the steps f) to m) are controlled by the control computer (21).

16. The method according to any one of the claims 1 to 15, **characterized in that**
an article (A1..J5) in the overall article sequence is any piece of multiple articles (A1..J5) of the same type of article which are stored in or on a loading aid,
steps f) to l) are executed by corresponding manipulation of the loading aid, and
step m) comprises the removal of the article (A1..J5) from or off the loading aid.

17. The method according to claim 16, **characterized in that** a remaining quantity of articles (A1..J5) which remains in or on the loading aid after step m) is stored in the storage area (2) again.

18. A picking system (1a..1e) with
a storage area (2), in which articles (A1..J5) are stored and which comprises a retrieval conveying system (4),
a first sorting device (6a..6c), which has multiple buffer conveyor lines (7, PL1..PL4) which are parallel in terms of conveyance and an input-side handover device (8) assigned per buffer conveyor line (7, PL1..PL4) and an output-side handover device (9) assigned per buffer conveyor line (7, PL1..PL4),
a first conveying system (10), which connects the storage area (2) and the first sorting device (6a..6c),
a second sorting device (11), which is arranged downstream of the first sorting device (6a..6c),
a second conveying system (15), which connects the first sorting device (6a..6c) and the second sorting device (11),
a picking area (16), which is arranged downstream of the second sorting device (11),
a third conveying system (19), which connects the second sorting device (11) and the picking area (16), and
a control system (20), which comprises a control computer (21) and which is connected to the first sorting device (6a..6c) and second sorting device (11), wherein the control computer (21) is configured for
a) acquiring multiple orders (AT1..AT10), each of which comprise at least one article (A1..J5),
b) forming an order sequence of the orders (AT1..AT10) desired in the picking area (16) and an article sequence of the articles (A1..J5) within each order (AT1..AT10) of the orders (AT1..AT10),
c) forming an overall article sequence by lining up the orders (AT1..AT10) in accordance with the desired order sequence,
d) segmenting the overall article sequence into article groups (WG1..WG7) each with a specifiable number of articles (A1..J5) independent of order boundaries (ATG) and forming a group sequence of the article groups (WG1..WG7) according to the overall article sequence, wherein the number of the articles (A1..J5) in an article group (WG1..WG7) corresponds to maximally the number of the articles (A1..J5) which can be brought into any sequence in the second sorting device (11),
e) forming a retrieval group (AG1, AG2), which comprises article groups (WG1..WG7) of the group sequence sorted in ascending order for whose articles (A1..J5) free capacity will be available in the first sorting device (6a..6c) upon a handover into the first sorting device (6a..6c),
f) triggering a retrieval of the articles (A1..J5) comprised by the retrieval group (AG1, AG2) from the storage area (2) using the retrieval conveying system (4),
g) triggering a transport of the articles (A1..J5) comprised by the retrieval group (AG1, AG2) to the first sorting device (6a..6c) using the first conveying system (10),
h) triggering a selective handover of the articles (A1..J5) of the retrieval group (AG1, AG2) from the first conveying system (10) onto the buffer conveyor lines (7, PL1..PL4) using the input-side handover devices (8), wherein articles (A1..J5) of an article group (WG1..WG7) of the retrieval group (AG1, AG2) are handed over into a vacant buffer area onto at least one of the buffer conveyor lines (7, PL1..PL4) and wherein the articles (A1..J5) of the article group (WG1..WG7) in the at least one buffer conveyor line (7, PL1..PL4) are arranged directly adjacent to one another in any sequence,
i) triggering a handover of the articles (A1..J5) of the article groups (WG1..WG7) handed over to the buffer conveyor lines (7, PL1..PL4) from the buffer conveyor lines (7, PL1..PL4) to the second conveying system (15) in the group sequence using the output-side handover devices (9),
j) triggering a transport of the articles (A1..J5) of the article groups (WG1..WG7) to the second sorting device (11) in the group sequence using the second conveying system (15),
k) triggering a groupwise sorting of the articles (A1..J5), article group (WG1..WG7) by article group (WG1..WG7), according to the order sequence in the second sorting device (11),
l) triggering a transport of the articles (A1..J5) from the second sorting device (11) into the picking area (16) in the order sequence using the third conveying system (19), and
m) triggering a reloading of the articles (A1..J5) into or onto target loading aids in accordance with the acquired orders (AT1..AT10) in the picking area (16).

## Revendications

1. Procédé en plusieurs étapes pour le séquençage automatique de marchandises (A1..J5) dans un système de préparation de commandes (1a..1e) qui comprend
un magasin (2) dans lequel des marchandises (A1..J5) sont stockées et qui comporte un système de convoyeur de prélèvement (4),
un premier dispositif de tri (6a..6c) qui présente plusieurs lignes de convoyeurs tampons parallèles en termes de technique de convoyage (7, PL1..PL4) et, affecté à chaque ligne de convoyeur tampon (7, PL1..PL4), un dispositif de transfert côté entrée (8) ainsi que, affecté à chaque ligne de convoyeur tampon (7, PL1..PL4), un dispositif de transfert côté sortie (9),
un premier système de convoyeur (10) qui relie le magasin (2) au premier dispositif de tri (6a..6c),
un deuxième dispositif de tri (11) disposé en aval du premier dispositif de tri (6a..6c), un deuxième système de convoyeur (15) qui relie le premier dispositif de tri (6a..6c) au deuxième dispositif de tri (11),
une zone de préparation de commandes (16) qui est disposée en aval du deuxième dispositif de tri (11),
un troisième système de convoyeur (19) qui relie le deuxième dispositif de tri (11) à la zone de préparation de commandes (16), et
un système de commande (20) qui comprend un calculateur de commande (21) et qui est relié au premier dispositif de tri (6a..6c) et au deuxième dispositif de tri (11),
ledit procédé comprenant les étapes consistant à :
a) saisir, dans le calculateur de commande (21), plusieurs commandes (AT1..AT10) comprenant chacune au moins une marchandise (A1..J5)
b) former, dans le calculateur de commande (21), une séquence souhaitée pour les commandes (AT1..AT10) dans la zone de préparation de commandes (16) et une séquence des marchandises (A1..J5) dans chaque commande (AT1..AT10) des commandes (AT1..AT10),
c) former, dans le calculateur de commande (21), une séquence globale des marchandises en enchaînant les commandes (AT1..AT10) conformément à la séquence de commandes souhaitée,
d) segmenter, dans le calculateur de commande (21), la séquence globale des marchandises en groupes de marchandises (WG1..WG7) comportant chacun un nombre prédéfinissable de marchandises (A1..J5) indépendamment des limites de commande (ATG), et former une séquence de groupes des groupes de marchandises (WG1..WG7) conformément à la séquence globale des marchandises, le nombre de marchandises (A1..J5) dans un groupe de marchandises (WG1..WG7) correspondant au maximum au nombre de marchandises (A1..J5) pouvant être amenées selon une séquence quelconque dans le deuxième dispositif de tri (11),
e) former, dans le calculateur de commande (21), un groupe de prélèvement (AG1, AG2) qui comprend des groupes de marchandises (WG1..WG7) triés par ordre croissant de la séquence de groupes, pour les marchandises (A1..J5) desquels, lors d'un transfert dans le premier dispositif de tri (6a..6c), une capacité libre sera disponible dans le premier dispositif de tri (6a..6c),
f) prélever les marchandises (A1..J5) incluses dans le groupe de prélèvement (AG1, AG2) à partir du magasin (2) au moyen du système de convoyeur de prélèvement (4),
g) transporter les marchandises (A1..J5) incluses dans le groupe de prélèvement (AG1, AG2) vers le premier dispositif de tri (6a..6c) au moyen du premier système de convoyeur (10),
h) transférer sélectivement les marchandises (A1..J5) du groupe de prélèvement (AG1, AG2) depuis le premier système de convoyeur (10) vers les lignes de convoyeurs tampons (7, PL1..PL4) au moyen des dispositifs de transfert côté entrée (8), des marchandises (A1..J5) d'un groupe de marchandises (WG1..WG7) du groupe de prélèvement (AG1, AG2) étant transférées dans une zone tampon libre sur l'une au moins des lignes de convoyeurs tampons (7, PL1..PL4), et les marchandises (A1..J5) du groupe de marchandises (WG1..WG7) étant disposées, sur la ou lesdites lignes de convoyeurs tampons (7, PL1..PL4), directement adjacentes les unes aux autres selon une séquence quelconque,
i) transférer les marchandises (A1..J5) transférées aux lignes de convoyeurs tampons (7, PL1..PL4) des groupes de marchandises (WG1..WG7), dans la séquence de groupes, depuis les lignes de convoyeurs tampons (7, PL1..PL4) vers le deuxième système de convoyeur (15) au moyen des dispositifs de transfert côté sortie (9),
j) transporter les marchandises (A1..J5) des groupes de marchandises (WG1..WG7), dans la séquence de groupes, vers le deuxième dispositif de tri (11) au moyen du deuxième système de convoyeur (15),
k) trier par groupes des marchandises (A1..J5), groupe de marchandises (WG1..WG7) après groupe de marchandises (WG1..WG7), conformément à la séquence des commandes dans le deuxième dispositif de tri (11),
l) transporter les marchandises (A1..J5), dans la séquence des commandes, depuis le deuxième dispositif de tri (11) vers la zone de préparation de commandes (16) au moyen du troisième système de convoyeur (19), et
m) transborder les marchandises (A1..J5) dans ou sur des moyens auxiliaires de chargement cibles conformément aux commandes saisies (AT1..AT10) dans la zone de préparation de commandes (16).

2. Procédé selon la revendication 1, **caractérisé en ce que**, à l'étape k), des groupes de marchandises (WG1..WG7) qui contiennent uniquement des marchandises (A1..J5) d'une seule commande (AT1..AT10) traversent le deuxième dispositif de tri (11) sans opération de tri ou le contournent par l'intermédiaire d'une dérivation (22).

3. Procédé selon la revendication 1, **caractérisé en ce que**
à l'étape b), on forme en plus, dans le calculateur de commande (21), une séquence souhaitée des marchandises (A1..J5) dans chaque commande (AT1..AT10) des commandes (AT1..AT10) dans la zone de préparation de commandes (16),
à l'étape c), on forme une séquence globale des marchandises souhaitée dans la zone de préparation de commandes (16) en enchaînant les commandes (AT1..AT10),
à l'étape k), la séquence globale des marchandises est produite en triant par groupes les marchandises (A1..J5), groupe de marchandises (WG1..WG7) après groupe de marchandises (WG1..WG7), dans le deuxième dispositif de tri (11), et
à l'étape l), les marchandises (A1..J5) sont transportées, au moyen du troisième système de convoyeur (19), vers la zone de préparation de commandes (16) selon la séquence globale des marchandises.

4. Procédé selon l'une des revendications 1 à 3, **caractérisé en ce que** chaque groupe de marchandises (WG1..WG7) présente le même nombre de marchandises (A1..J5).

5. Procédé selon la revendication 4, **caractérisé en ce que** le nombre de marchandises (A1..J5) dans un groupe de marchandises (WG1..WG7) correspond exactement au nombre de marchandises (A1..J5) qui peuvent être amenées dans une séquence quelconque dans le deuxième dispositif de tri (11).

6. Procédé selon l'une des revendications 1 à 5, **caractérisé en ce que** les marchandises (A1..J5) d'un groupe de marchandises (WG1..WG7) du groupe de prélèvement (AG1, AG2) sont stockées dans une zone libre d'exactement une des lignes de convoyeurs tampons (7, PL1..PL4).

7. Procédé selon la revendication 6, **caractérisé en ce que** chacune des lignes de convoyeurs tampons (7, PL1..PL4) reçoit des marchandises (A1..J5) d'exactement un groupe de marchandises (WG1..WG7).

8. Procédé selon la revendication 7, **caractérisé en ce que**, à l'étape f), le prélèvement des marchandises (A1..J5) incluses dans le groupe de prélèvement (AG1, AG2) s'effectue selon une séquence chaotique.

9. Procédé selon la revendication 6, **caractérisé en ce que** chacune des lignes de convoyeurs tampons (7, PL1..PL4) reçoit des marchandises (A1..J5) de plusieurs groupes de marchandises (WG1..WG7) entiers, les groupes de marchandises (WG1..WG7) ayant un numéro d'ordre conformément à la séquence de groupes, et des marchandises (A1..J5) de groupes de marchandises (WG1..WG7) ayant un numéro d'ordre plus faible étant stockées plus en aval, dans la ligne tampon respective, que des marchandises (A1..J5) de groupes de marchandises (WG1..WG7) ayant un numéro d'ordre plus élevé.

10. Procédé selon l'une des revendications 1 à 5, **caractérisé en ce que** les marchandises (A1..J5) de certains des groupes de marchandises (WG1..WG7) du groupe de prélèvement (AG1, AG2) sont stockées dans des zones libres de plusieurs des lignes de convoyeurs tampons (7, PL1..PL4).

11. Procédé selon la revendication 10, **caractérisé en ce qu'**un quotient entre une capacité en marchandises d'une ligne de convoyeur tampon (7, PL1..PL4) des lignes de convoyeurs tampons (7, PL1..PL4) et le nombre de marchandises (A1..J5) dans un groupe de marchandises (WG1..WG7) n'est pas entier, les groupes de marchandises (WG1..WG7) ayant un numéro d'ordre conformément à la séquence de groupes, et des marchandises (A1..J5) de groupes de marchandises (WG1..WG7) ayant un numéro d'ordre plus faible étant stockées plus en aval, dans la ligne tampon respective, que des marchandises (A1..J5) de groupes de marchandises (WG1..WG7) ayant un numéro d'ordre plus élevé.

12. Procédé selon l'une des revendications 9 à 11, **caractérisé en ce que**, à l'étape f), le prélèvement des marchandises (A1..J5) incluses dans le groupe de prélèvement (AG1, AG2) s'effectue selon une séquence chaotique, des marchandises (A1..J5) de ces groupes de marchandises (WG1..WG7) qui, à l'étape h), sont transférés successivement sur l'une des lignes de convoyeurs tampons (7, PL1..PL4), étant prélevées conformément à la séquence de groupes.

13. Procédé selon l'une des revendications 9 à 11, **caractérisé en ce que**, à l'étape f), le prélèvement des marchandises (A1..J5) incluses dans le groupe de prélèvement (AG1, AG2) s'effectue selon une séquence chaotique, un groupe de prélèvement (AG1, AG2) à l'étape e) présentant au maximum autant de groupes de marchandises (WG1..WG7) que de lignes de convoyeurs tampons (7, PL1..PL4) qui auront une capacité libre pour recevoir des marchandises (A1..J5) d'un groupe de marchandises (WG1..WG7) lors d'un transfert des marchandises (A1..J5) du groupe de prélèvement (AG1, AG2) vers le premier dispositif de tri (6a..6c).

14. Procédé selon l'une des revendications 1 à 13, **caractérisé en ce que** les étapes f) à m) sont déclenchées par le calculateur de commande (21).

15. Procédé selon l'une des revendications 1 à 14, **caractérisé en ce qu'**une ou plusieurs des étapes f) à m) sont commandées par le calculateur de commande (21).

16. Procédé selon l'une des revendications 1 à 15, **caractérisé en ce que**
une marchandise (A1..J5) dans la séquence globale des marchandises est une pièce quelconque parmi plusieurs marchandises (A1..J5) des mêmes types de marchandise qui sont stockées dans ou sur un moyen auxiliaire de chargement,
les étapes f) à l) sont réalisées par une manipulation correspondante du moyen auxiliaire de chargement, et
l'étape m) comprend le prélèvement de la marchandise (A1..J5) hors du ou depuis le moyen auxiliaire de chargement.

17. Procédé selon la revendication 16, **caractérisé en ce qu'**une quantité résiduelle de marchandises (A1..J5) restant dans ou sur le moyen auxiliaire de chargement après l'étape m) est réintégrée dans le magasin (2).

18. Système de préparation de commandes (1a..1e) comprenant
un magasin (2) dans lequel des marchandises (A1..J5) sont stockées et qui comporte une système de convoyeur de prélèvement (4),
un premier dispositif de tri (6a..6c) qui présente plusieurs lignes de convoyeurs tampons parallèles en termes de technique de convoyage (7, PL1..PL4) et, affecté à chaque ligne de convoyeur tampon (7, PL1..PL4), un dispositif de transfert côté entrée (8) ainsi que, affecté à chaque ligne de convoyeur tampon (7, PL1..PL4), un dispositif de transfert côté sortie (9),
un premier système de convoyeur (10) qui relie le magasin (2) au premier dispositif de tri (6a..6c),
un deuxième dispositif de tri (11) qui est disposé en aval du premier dispositif de tri (6a..6c),
un deuxième système de convoyeur (15) qui relie le premier dispositif de tri (6a..6c) au deuxième dispositif de tri (11),
une zone de préparation de commandes (16) qui est disposée en aval du deuxième dispositif de tri (11),
un troisième système de convoyeur (19) qui relie le deuxième dispositif de tri (11) à la zone de préparation de commandes (16), et
un système de commande (20) qui comprend un calculateur de commande (21) et qui est relié au premier dispositif de tri (6a..6c) et au deuxième dispositif de tri (11), le calculateur de commande (21) étant conçu pour
a) saisir plusieurs commandes (AT1..AT10) comprenant chacune au moins une marchandise (A1..J5),
b) former une séquence de commandes souhaitée pour les commandes (AT1..AT10) dans la zone de préparation de commandes (16) et une séquence des marchandises (A1..J5) dans chaque commande (AT1..AT10) des commandes (AT1..AT10),
c) former une séquence globale des marchandises en enchaînant les commandes (AT1..AT10) conformément à la séquence de commandes souhaitée,
d) segmenter la séquence globale des marchandises en groupes de marchandises (WG1..WG7) comportant chacun un nombre prédéfinissable de marchandises (A1..J5) indépendamment des limites de commande (ATG), et former une séquence de groupes des groupes de marchandises (WG1..WG7) conformément à la séquence globale des marchandises, le nombre de marchandises (A1..J5) dans un groupe de marchandises (WG1..WG7) correspondant au maximum au nombre de marchandises (A1..J5) pouvant être amenées dans une séquence quelconque dans le deuxième dispositif de tri (11),
e) former un groupe de prélèvement (AG1, AG2) qui comprend des groupes de marchandises (WG1..WG7) triés par ordre croissant de la séquence de groupes, pour les marchandises (A1..J5) desquels, lors d'un transfert dans le premier dispositif de tri (6a..6c), une capacité libre sera disponible dans le premier dispositif de tri (6a..6c),
f) déclencher un prélèvement des marchandises (A1..J5) incluses dans le groupe de prélèvement (AG1, AG2) depuis le magasin (2) au moyen du système de convoyeur de prélèvement (4),
g) déclencher un transport des marchandises (A1..J5) incluses dans le groupe de prélèvement (AG1, AG2) vers le premier dispositif de tri (6a..6c) au moyen du premier système de convoyeur (10),
h) déclencher un transfert sélectif des marchandises (A1..J5) du groupe de prélèvement (AG1, AG2) depuis le premier système de convoyeur (10) vers les lignes de convoyeurs tampons (7, PL1..PL4) au moyen des dispositifs de transfert côté entrée (8), des marchandises (A1..J5) d'un groupe de marchandises (WG1..WG7) du groupe de prélèvement (AG1, AG2) étant transférées dans une zone tampon libre sur l'une au moins des lignes de convoyeurs tampons (7, PL1..PL4), et les marchandises (A1..J5) du groupe de marchandises (WG1..WG7) étant disposées, sur la ou lesdites lignes de convoyeurs tampons (7, PL1..PL4), directement adjacentes les unes aux autres selon une séquence quelconque,
i) déclencher un transfert des marchandises (A1..J5) transférées sur les lignes de convoyeurs tampons (7, PL1..PL4) des groupes de marchandises (WG1..WG7), dans la séquence des groupes, depuis les lignes de convoyeurs tampons (7, PL1..PL4) vers le deuxième système de convoyeur (15) au moyen des dispositifs de transfert côté sortie (9),
j) déclencher un transport des marchandises (A1..J5) des groupes de marchandises (WG1..WG7), dans la séquence de groupes, vers le deuxième dispositif de tri (11) au moyen du deuxième système de convoyeur (15),
k) déclencher un tri par groupes des marchandises (A1..J5), groupe de marchandises (WG1..WG7) après groupe de marchandises (WG1..WG7), conformément à la séquence des commandes, dans le deuxième dispositif de tri (11),
l) déclencher un transport des marchandises (A1..J5), selon la séquence des commandes, depuis le deuxième dispositif de tri (11) vers la zone de préparation de commandes (16) au moyen du troisième système de convoyeur (19), et
m) déclencher un transbordement des marchandises (A1..J5) dans ou sur des moyens auxiliaires de chargement cibles conformément aux commandes (AT1..AT10) saisies dans la zone de préparation de commandes (16).
